(19) **Europäisches Patentamt**
**European Patent Office**
**Office européen des brevets**

(11) **EP 4 779 372 A1**

(12) **EUROPÄISCHE PATENTANMELDUNG**

(43) Veröffentlichungstag:
   **22.07.2026 Patentblatt 2026/30**

(21) Anmeldenummer: **26151035.8**

(22) Anmeldetag: **09.01.2026**

(51) Internationale Patentklassifikation (IPC):
   **G02B 6/30** (2006.01)     **G02B 6/122** (2006.01)
   **G02B 6/28** (2006.01)

(52) Gemeinsame Patentklassifikation (CPC):
   **G02B 6/305;** G02B 6/1228; G02B 6/2813;
   G02B 6/32; G02B 2006/12069; G02B 2006/1209

(84) Benannte Vertragsstaaten:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Benannte Erstreckungsstaaten:
   **BA**
   Benannte Validierungsstaaten:
   **GE KH LA MA MD TN**

(30) Priorität: **21.01.2025 DE 102025102048**

(71) Anmelder: **Fraunhofer-Gesellschaft zur
   Förderung
   der angewandten Forschung e.V.
   80686 München (DE)**

(72) Erfinder:
   • **ABADIAN, Sevag
     13355 Berlin (DE)**

   • **TEKIN, Tolga
     13355 Berlin (DE)**
   • **SIRBU, Marian Bogdan
     13355 Berlin (DE)**
   • **SYMEONIDIS, Michail
     13355 Berlin (DE)**
   • **WINKLER, Stanislav Sonovic
     13355 Berlin (DE)**

(74) Vertreter: **Zimmermann, Tankred Klaus
   Schoppe, Zimmermann, Stöckeler
   Zinkler, Schenk & Partner mbB
   Patentanwälte
   Radlkoferstrasse 2
   81373 München (DE)**

(54) **WELLENLEITERSYSTEM ZUM LEITEN VON LICHT, VERFAHREN ZUM HERSTELLEN UND VERFAHREN ZUM BETREIBEN EINES WELLENLEITERSYSTEMS**

(57) Beschrieben ist ein Wellenleitersystem zum Leiten von Licht, umfassend: einen Eingangswellenleiter (W1) zum Leiten einer einzelnen Mode eines Lichtsignals, einen ersten Multimoden-Wellenleiter (MMW1) zum Leiten mehrerer verschiedener Moden des Lichtsignals, wobei der Eingangswellenleiter (W1) und der Multimoden-Wellenleiter (MMW1) miteinander verbunden sind, einen zweiten Multimoden-Wellenleiter (MMW2) zum Leiten der mehreren verschiedenen Moden des Lichtsignals, und einen Ausgangswellenleiter (W2) zum Ausleiten des Lichtsignals, wobei der Ausgangswellenleiter (W2) und der zweite Multimoden-Wellenleiter (MMW2) miteinander verbunden sind, wobei der Ausgangswellenleiter eine einzelne Mode des Lichtsignals ausleitet. Ferner sind Verfahren zum Herstellen und Betreiben eines Wellenleitersystems beschrieben.

Fig. 1

EP 4 779 372 A1

## Beschreibung

Beschrieben ist ein Wellenleitersystem zum Leiten von Licht, ein Verfahren zum Herstellen und ein Verfahren zum Berteiben eines Wellenleitersystems, insbesondere welches Mehrmoden-Fokussierungswellenleiter umfasst.

Die fortschreitende Miniaturisierung elektronischer Komponenten hat zu entscheidenden Fortschritten geführt, einschließlich der Entwicklung kleinerer, tragbarer Geräte, die in der Tasche getragen werden können. Diese Technologie ermöglicht die Herstellung kompakter elektronischer, mechanischer und optischer Produkte wie Computer, Halbleiterchips, Sensoren, Biosensoren, IC und Mikroprozessoren. Die Miniaturisierung hat die Integration grö-βerer Batterien ermöglicht, ohne die Gesamtgröße des Geräts zu erhöhen, was die Leistungsfähigkeit und die Attraktivität für den Verbraucher erhöht. Sie führt auch zu kürzeren Signalwegen mit weniger Streuinduktivität und -kapazität, was die Signalintegrität verbessert und höhere Betriebsgeschwindigkeiten ermöglicht. Die geringere Größe und höhere Dichte elektronischer Komponenten kann zu einer höheren Leistungsaufnahme und zu Wärmeproblemen führen, so dass das Wärmemanagement von entscheidender Bedeutung ist. Da elektronische Signale im Vergleich zu optischen Signalen mit Widerständen, ohmschen Verlusten und niedrigeren Ausbreitungsgeschwindigkeiten konfrontiert sind, treiben diese Herausforderungen den Wechsel zur Photonik voran, die Licht zur Datenübertragung nutzt. Die Photonik bietet eine höhere Bandbreite, schnellere Geschwindigkeiten, eine geringere Wärmerzeugung und geringen Platzbedarf, wenn man die Leitungsführung und die Platine-zu-Platine-Verbindungen in Betracht zieht, was sie zu einem wesentlichen Faktor beim Erfüllen der wachsenden Anforderungen bei der Datenverarbeitung und Kommunikation macht, insbesondere für die photonische Leitungsführung und die Platine-zu-Platine-Verbindungen.

Photonische integrierte Schaltungen (PICs), die Licht zur Datenverarbeitung nutzen, stellen jedoch eine Reihe eigener Herausforderungen dar. Die Integration aller erforderlichen photonischen Komponenten auf einem einzigen Chip ist schwierig, da für die verschiedenen photonischen Funktionen unterschiedliche Materialien benötigt werden. Die photonische Integration erfordert eine flexible Häusungstechnologie, die verlustarme Verbindungen zwischen den photonischen Chips ermöglicht. Silizium, das üblicherweise in der Elektronik verwendet wird, ist nicht für alle photonischen Anwendungen, wie z. B. die Lichterzeugung, geeignet. Folglich führt die Integration verschiedener Materialien auf einem Chip zu einer komplexen Herstellung und potentiellen Leistungsproblemen, was eine monolithische Integration zu einer Herausforderung macht. Um diese Einschränkungen zu überwinden, hat sich die heterogene Integration zu einem wichtigen Ansatz entwickelt.

Bei der heterogenen Integration werden verschiedene Materialien und Komponenten, die jeweils für ihre Funktion geeignet sind, auf einer einzigen Plattform kombiniert und fein säuberlich nebeneinander montiert. Dieses Verfahren ermöglicht die Verwendung von Materialien wie Indiumphosphid (InP) für Laser neben Silizium für andere Komponenten, was die Gesamtleistungsfähigkeit und Funktionalität verbessert. Darüber hinaus bietet sie eine größere Flexibilität und Skalierbarkeit bei der Herstellung und ist damit eine praktische Lösung für hochleistungsfähige, multifunktionale photonische Systeme. Trotz dieser Fortschritte bleibt die effiziente Kopplung von Signalen von einem photonischen Chip zu einem anderen über eine bestimmte Entfernung eine Herausforderung aufgrund der Strahlendivergenz, die Signalverlust verursacht. Mit zunehmender Strahldivergenz nimmt die Kopplungseffizienz ab und wird mit zunehmender Entfernung noch schlechter. So kommt es beispielsweise bei einer Wellenlänge von 1,55 $\mu$m bei der Kopplung zwischen zwei geraden Wellenleitern zu einem ungefähren Verlust von 1 dB/$\mu$m Spaltlänge.

Um diese Herausforderungen der Randkopplung zu bewältigen, sind neue Technologien entstanden. Mit dem 3D-Druck photonischer Nanostrukturen können beispielsweise photonische Drähte oder Verjüngungen gedruckt werden, um Licht von einem Wellenleiter in einen anderen oder von einer Faser in einen Chip einzukoppeln. Diese Technologien sind jedoch oft teuer und komplex in der Umsetzung. Gedruckte Mikrolinsen auf Chip- oder Faserfacetten mit einem typischen Arbeitsabstand von wenigen Mikrometern können ebenfalls bei der Kopplung helfen, bereiten aber Schwierigkeiten bei der präzisen Ausrichtung und gleichmäßigen Leistungsfähigkeit. Diese Fortschritte bieten zwar potentielle Lösungen, aber die damit verbundenen Kosten und technischen Herausforderungen müssen sorgfältig bedacht werden, um die Vorteile der photonischen Integration voll auszuschöpfen.

Die optische Kopplung von Chip zu Chip oder von Wellenleiter zu Wellenleiter stellt eine große Herausforderung dar, die vor allem durch Strahldivergenz verursacht wird. Dieser Abschnitt ist der Beschreibung und Analyse verschiedener Verfahren gewidmet, mit denen die Leistungsfähigkeit der Randkopplung potentiell gesteigert werden kann. Deren Vor- und Nachteile werden ebenfalls aufgezeigt.

*Photonische Drahtverbindungen*

Photonisches Drahtbonden (PWB; PWB = Photonic Wire Bonding) hat sich als attraktive Technologie für einmodige Chip-zu-Chip-Verbindungen in der photonischen Integration etabliert. Analog zum Metalldraht-Bonden in der Elektronik, das integrierte Schaltkreise mit der Außenwelt verbindet, verwendet PWB transparente Polymerwellenleiter, um nanophotonische Schaltkreise über verschiedene Chips hinweg zu verbinden. Diese Technologie macht eine hochpräzise Ausrichtung optischer Bauelemente überflüssig, durch Anpassen der Formen der photonischen Drahtverbindungen an die tatsächlichen Positionen der integrierten Wellenleiterfacetten.

Die photonische Integration profitiert von mehreren Plattformen, die jeweils unterschiedliche Stärken haben. Silizium-auf-Isolator (SOI) ist optimal für die dichte Integration von passiven Bauelementen, elektro-optischen Modulatoren und Germanium-Photodetektoren neben elektronischer Schaltungsanordnung unter Verwendung ausgereifter CMOS-Prozesse. III-V-Materialien sind effizient für optische Quellen und Verstärker, während Siliziumoxid, Siliziumnitrid und Polymerwellenleiter für hochwertige optische Filter und passive Komponenten unerlässlich sind. Die PWB-Technologie erleichtert die gemeinsame Integration dieser verschiedenen photonischen Bauelementtechnologien in flexible Multi-Chip-Systeme, wodurch die technologische Komplexität verringert und die Systemleistungsfähigkeit verbessert werden kann.

In ihrer Forschung untersuchten Lindenmann u.a. (2015) die Integration von photonischen Siliziumschaltungen mit Mehrkernfasern unter Verwendung von PWB. Das Team nutzte die In-situ-Fertigung, um dreidimensionale Verbindungswellenleiter zwischen den Faserfacetten und sich verjüngenden Silizium-auf-Isolator-Wellenleitern herzustellen. Dieser Ansatz gleicht Ungenauigkeiten bei der Kernplatzierung effektiv aus, ohne dass eine aktive Ausrichtung erforderlich ist. Die daraus resultierenden photonischen Drahtverbindungen wiesen Kopplungsverluste von nur 1,7 dB auf, was auf eine äußerst effiziente Kopplung hindeutet [1, 2].

Eine andere Abhandlung erörtert, wie ein III-V-Laser erfolgreich mit einem photonischen Chip drahtgebondet werden kann. Mitchell u.a. stellen ein innovatives Verfahren zum Integrieren von III-V-Lasern mit photonischen Siliziumschaltungen vor. Das von ihnen angewandte Verfahren umfasste eine Herstellung von dreidimensionalen Polymerwellenleitern durch Zwei-Photonen-Polymerisation. Mit diesem Ansatz wurden geringe Einfügungsverluste von 2,25 dB pro PWB bei 1268 nm erreicht und eine Kopplungseffizienz von 59%±5% nachgewiesen, was einen bedeutenden Fortschritt bei der hybriden photonischen Integration darstellt [3].

In einer anderen Abhandlung verwendeten Forscher PWB, um verlustarme optische Verbindungen zwischen Einmoden-Fasern und photonischen Silizium-Chips herzustellen. Das Verfahren zeigte Einfügungsverluste von weniger als 2 dB pro Verbindung und zeigte sich robust gegenüber Temperaturschwankungen und kompatibel mit Ultrahochvakuumumgebungen, ohne dass eine aktive Ausrichtung erforderlich war [4].

T. Hoose u.a. stellen ein neuartiges Verfahren zum Integrieren von Standard-InP-Kantenemissionslasern mit photonischen Silizium-Schaltkreisen unter Verwendung von photonischem Drahtbonden vor. Sie demonstrieren eine erfolgreiche Kopplung von sowohl Oberflächen- als auch Kantenemissionslasern mit Siliziumchips wobei ein Kopplungsverlust von 4,3 dB mit Potenzial für weitere Verbesserungen erreicht wird. In Experimenten bestätigen sie, dass Rückreflexionen vom Siliziumchip die Linienbreite der Laser nicht beeinträchtigen, wodurch photonisches Drahtbonden als praktikable Technik für die Mehrchip-Integration von InP-basierten Lichtquellen mit siliziumbasierten photonischen Schaltungen bestätigt wird [5].

Zusammenfassend lässt sich sagen, dass PWB einen neuen Ansatz für die Verbindung von zwei Wellenleitern darstellen. Bei diesem Verfahren können zusätzlich zu den Einfügungs-, Strahlungs- und Biegeverlusten während der Ausbreitung optische Fehlanpassungsverluste an jeder Grenzfläche auftreten.

### *Gedruckte Mikrolinsen*

Gedruckte Mikrolinsen stellen eine Lösung für die Herausforderung der optischen Kopplung zwischen Chips oder Fasern dar. Diese Mikrolinsen können mit Verfahren wie Resist-Reflow, Laserschreiben, Tintenstrahldruck und Heißprägen hergestellt werden. Resist-Reflow, eine weit verbreitete Technik, ermöglicht die Massenproduktion von Mikrolinsen mit hoher Gleichmäßigkeit und Präzision. Dieser Prozess umfasst eine Verwendung von Licht, um ein lichtempfindliches Material zu strukturieren und anschließend zu erhitzen, um das Material in glatte, gekrümmte Oberflächen umzuformen. Das Laserschreiben bietet die Flexibilität, kundenspezifische Mikrolinsen mit komplizierten Merkmalen durch direkte Laserbelichtung herzustellen. Der Tintenstrahldruck zeichnet sich durch seinen additiven Fertigungsansatz aus, der die kontrollierte Ablagerung von Linsenmaterial zur Bildung von Mikrolinsen ermöglicht. Das Heißprägen hingegen ist ein effizientes Replikationsverfahren, bei dem eine Urform verwendet wird, um Mikrolinsenstrukturen unter Hitze und Druck auf ein Substrat zu prägen.

Die Wahl der Materialien für Mikrolinsen ist von entscheidender Bedeutung, da sie deren optische Leistung und Kompatibilität mit verschiedenen Anwendungen beeinflusst. Zu den gängigen Materialien gehören Polymere, Glas und Halbleitermaterialien. Polymere wie Polymethylmethacrylat (PMMA) und Polydimethylsiloxan (PDMS) sind aufgrund ihrer einfachen Verarbeitung, Flexibilität und geringen Kosten beliebt. Mikrolinsen aus Glas bieten eine hervorragende optische Klarheit und thermische Stabilität und eignen sich daher für Hochpräzisions- und Hochtemperaturanwendungen.

Eine der wichtigsten Anwendungen von Mikrolinsenanordnungen ist die Verbesserung der optischen Kopplung zwischen Wellenleitern. Dieser Prozess ist wesentlich für PIC und optische Kommunikationssysteme, bei denen eine effiziente Lichtübertragung zwischen verschiedenen optischen Komponenten entscheidend ist. Mikrolinsen verbessern die Kopplungseffizienz durch Fokussieren von Licht von einem Wellenleiter in einen anderen mit minimalem Verlust, wodurch sichergestellt wird, dass Lichtsignale präzise und effektiv übertragen werden. In PIC erleichtern Mikrolinsen die präzise Ausrichtung und Kopplung von Licht zwischen Wellenleitern und anderen optischen Komponenten, wie Fasern und Detektoren. Diese Fähigkeit ist besonders wichtig für dichte photonische Schaltungen, bei denen Platzmangel und Ausrichtungsgenauigkeit wesentlich sind. Durch die Optimierung des Lichtkopplungsprozesses tragen Mikrolinsen dazu bei, Einfügungsverluste zu verringern und die Gesamtleistung des Systems zu verbessern.

In optischen Kommunikationssystemen erhöhen Mikrolinsen die Kopplungseffizienz zwischen optischen Fasern und Wellenleitern und verbessern so die Qualität der Signalübertragung. Diese Verbesserung ist von entscheidender Bedeutung für die optische Kommunikation über große Entfernungen, bei der die Aufrechterhaltung der Signalintegrität über große Entfernungen essentiell ist. Der Einsatz von Mikrolinsen in diesen Systemen trägt dazu bei, Signalverschlechterung und Leistungsverlust zu minimieren, was zu einer zuverlässigeren und effizienteren Datenübertragung beiträgt.

In einer kürzlich von Xu u.a. veröffentlichten Studie stellten Wissenschaftler Facetten-angebrachte Mikrolinsen (FaML; FaML = facet-attached microlenses) als Lösung für die Herausforderungen der Skalierbarkeit in PIC-basierten Systemen vor. Mithilfe der Multiphotonen-Lithografie werden FaMLs präzise in 3D auf die Facetten optischer Komponenten gedruckt und bieten die Möglichkeit, emittierte Strahlen mit brechenden oder reflektierenden Oberflächen zu formen. Bei Demonstrationen wurden Einfügungsverluste von 1,4 dB pro Grenzfläche und eine translatorische, laterale 1-dB-Ausrichtungstoleranz von $\pm 6\ \mu m$ bei der Kopplung von Faserarrays mit Arrays aus kantengekoppelten photonischen Siliziumchips nachgewiesen [6].

In ihrer Studie demonstrieren Dietrich u.a. die Wirksamkeit des In-situ-Drucks von Strahlformungselementen, die an den Facetten angebracht sind, um die Herausforderungen bei der Montage hybrider photonischer Systeme zu meistern. Durch das Drucken von optischen 3D-Freiform-Elementen direkt auf die Facetten der Bauelemente erreichen sie eine präzise Anpassung von sehr unterschiedlichen Modenprofilen und Ausrichtungstoleranzen, die mit kosteneffizienten passiven Montagetechniken kompatibel sind. Sie präsentieren einen Werkzeugkasten mit wesentlichen Strahlformungselementen, einschließlich Freiformlinsen, Spiegeln und Mehrlinsen-Strahlaufweitern, die eine hocheffiziente und positionstolerante Kopplung ermöglichen. Zu den experimentellen Ergebnissen gehören Kopplungseffizienzen von bis zu 88 % zwischen kantenemittierenden Lasern und Einmoden-Fasern, mit Kopplungsverlusten von nur 0,6 dB für einzelne Freiformlinsen. Sie zeigen auch, dass die Kopplung von VCSEL an SMF mit gedruckten Freiformspiegeln möglich ist, wobei Kopplungsverluste von bis zu 1,1 dB erreicht werden [7].

Mikrolinsen bieten Vorteile wie Einfachheit, Skalierbarkeit und kostengünstige Herstellung, wodurch sie in verschiedenen photonischen Anwendungen weit verbreitet sind. Ihre Leistungsfähigkeit kann jedoch durch Faktoren wie Ausrichtungsgenauigkeit, Fertigungsschwankungen und Arbeitsabstandsbeschränkungen eingeschränkt sein.

### Photonische Spotgrößenwandler (invertierte Verjüngungen)

Photonische Spotgrößenwandler (SSC; SSC = spot size converter) sind wesentliche Komponenten in der integrierten Optik, die dazu entworfen sind, den Modenfelddurchmesser optischer Signale zwischen Bauelementen mit unterschiedlichen Modalprofilen umzuwandeln. Diese Wandler sind besonders wichtig für effizientes Koppeln von Licht zwischen PIC und optischen Fasern oder zwischen verschiedenen photonischen Komponenten auf dem Chip, die unterschiedliche Wellenleiterabmessungen aufweisen. SSC verwenden in der Regel sich verjüngende Strukturen mit Längen in der Größenordnung von Hunderten von $\mu m$ für eine adiabatische Umwandlung und Übergänge, um eine reibungslose und effiziente Modentransformation zu erreichen. In einem SSC verschmälert sich die Breite des Wellenleiters allmählich entlang der Lichtausbreitungsrichtung und erreicht an der Spitze eine minimale Breite. Wenn die Abmessungen des Wellenleiters schrumpfen, wird die geführte Mode weniger eingegrenzt, ihre effektive Querschnittsfläche wächst und ihr effektiver Index sinkt. Durch die Minimierung der Modenfehlanpassungsverluste verbessern diese Wandler die Kopplungseffizienz, wodurch Einfügungsverluste verringert werden und die Gesamtleistungsfähigkeit des Systems verbessert wird.

Almeida u.a. [8] verjüngten einen Einmoden-SOI-Wellenleiter unter Verwendung eines parabolischen Übergangs bis zu einer 100 nm breiten Spitze. Numerische Simulationen ergaben einen verjüngungsbedingten Verlust von nur 0,25 dB, und Experimente zeigten eine Kopplungseffizienz von etwa 46,8 % für transversales magnetisches (TM) Licht und 25,1 % für transversales elektrisches (TE) Licht bei einer Wellenlänge von 1,55 $\mu m$.

**Tabelle 1:** Arten und Charakteristika verschiedener optischer Kopplungsstrategien.

|  | Spotgrößenwandler | Photonische Drahtverbindung | Mikrolinse |
|---|---|---|---|
| Kupplungsverlust | Niedrig | Moderat | Moderat |
| Fehlausrichtungstoleranz | Niedrig | Moderat | Hoch |
| Einfügungsdämpfung | Niedrig | Moderat | Moderat |
| Arbeitsabstand | Kurz | Kurz | Moderat |

(fortgesetzt)

| | Spotgrößenwandler | Photonische Drahtverbindung | Mikrolinse |
|---|---|---|---|
| Integration | Moderat | Hoch | Moderat |
| Strahldivergenz | Hoch | NA | Niedrig vor dem Brennpunkt Hoch nach dem Brennpunkt |

Zusammenfassend bieten die bisher bereitgestellten Verfahren praktikable Lösungen für die optische Chip-zu-Chip- oder Faser-zu-Chip-Kopplung. Während photonische Drahtverbindungen eine hohe Kopplungseffizienz und Zuverlässigkeit bieten, erfordern sie jedoch spezielle Fertigungstechniken und können Einschränkungen aufweisen, wenn die Spaltlänge zwischen den Chips zunimmt. Gedruckte Mikrolinsen sind zwar einfach und kosteneffizient, leiden aber möglicherweise an Ausrichtungs- und Leistungseinschränkungen. Andererseits haben Punktgrößenwandler einen kurzen Arbeitsabstand und sind sehr empfindlich gegenüber Fehlausrichtung.

Eine Aufgabe der vorliegenden Erfindung ist es, ein Wellenleitersystem zum Leiten von Licht bereit zu stellen, mit welchem zwei Bauteile einfach , insbesondere ohne präzise Ausrichtung in Richtung der Ausbreitung, koppelbar sind, insbesondere verlustarm in Bezug auf die optische Signalleitung koppelbar sind.

Diese Aufgabe wird durch die Gegenstände der beigefügten unabhängigen Ansprüche gelöst.

Vorschlagsgemäß umfasst Wellenleitersystem zum Leiten von Licht einen Eingangswellenleiter zum Leiten einer einzelnen Mode eines Lichtsignals, einen ersten Multimoden-Wellenleiter zum Leiten mehrerer verschiedener Moden des Lichtsignals, wobei der Eingangswellenleiter und der Multimoden-Wellenleiter miteinander verbunden sind, einen zweiten Multimoden-Wellenleiter zum Leiten der mehreren verschiedenen Moden des Lichtsignals, und einen Ausgangswellenleiter zum Ausleiten des Lichtsignals, wobei der Ausgangswellenleiter und der zweite Multimoden-Wellenleiter miteinander verbunden sind, wobei der Ausgangswellenleiter eine einzelne Mode des Lichtsignals ausleitet. Bei den Multimoden-Wellenleiter handelt es sich jeweils um Mehrmoden-Fokussierungswellenleiter MFW. Das Wellenleitsystem kann auch als MFW-System bezeichnet werden. Bevorzugt sind der erste Multimoden-Wellenleiter und der zweite Multimoden-Wellenleiter über eine Spaltregion gekoppelt, wobei die Spaltregion dazu, insbesondere hinsichtlich ihrer Erstreckung, ausgebildet ist, in der Spaltregion eine stehende Welle aus dem Lichtsignal zu erzeugen.

Ein weiterer Aspekt der vorliegenden Erfindung betrifft ein Verfahren zum Herstellen eines soeben beschriebenen Wellenleitersystems. Das Verfahren umfasst ein Bereitstellen eines Eingangswellenleiters zum Leiten einer einzelnen Mode eines Lichtsignals und eines ersten Multimoden-Wellenleiters zum Leiten mehrerer verschiedener Moden des Lichtsignals, und ein Verbinden des Eingangswellenleiter und des ersten Multimoden-Wellenleiter miteinander. Das Verfahren umfasst ferner ein Bereitstellen eines zweiten Multimoden-Wellenleiter zum Leiten der mehreren verschiedenen Moden des Lichtsignals und eines Ausgangswellenleiters zum Ausleiten des Lichtsignals, und ein Verbinden des Ausgangswellenleitersund des zweiten Multimoden-Wellenleiter miteinander. Außerdem umfasst das Verfahren ein Anordnen des ersten Multimoden-Wellenleiters gegenüber dem zweiten Multimoden-Wellenleiter derart, dass der Eingangswellenleiter an einem Ende des ersten Multimoden-Wellenleiters und der zweite Multimoden-Wellenleiter dem ersten Multimoden-Wellenleiter gegenüberliegend angeordnet ist.

Ein weiterer Aspekt der vorliegenden Erfindung betrifft ein Verfahren zum Herstellen Einkoppeln des Lichtsignals von dem ersten Multimoden-Wellenleiters in eine Spaltregion zwischen dem ersten Multimoden-Wellenleiters und dem zweiten Multimoden-Wellenleiter. Alternativ oder zusätzlich umfasst das Verfahren ein Einkoppeln des Lichtsignals von dem ersten Multimoden-Wellenleiters in eine erste Antireflexionsbeschichtung an einer Endoberfläche des ersten Multimoden-Wellenleiters, um eine Reflexion zurück in den ersten Multimoden-Wellenleiters zu verringern. Alternativ oder zusätzlich umfasst das Verfahren ein Einkoppeln des Lichtsignals in eine zweite Antireflexionsbeschichtung an einer Endoberfläche des zweiten Multimoden-Wellenleiters, um eine Reflexion zurück in den ersten Multimoden-Wellenleiter oder in die Spaltregion zu verringern. Alternativ oder zusätzlich umfasst das Verfahren ein Einkoppeln des Lichtsignals in einen adiabatischen kegelförmigen Wellenleiter zwischen dem Eingangswellenleiter und dem ersten Multimoden-Wellenleiter und/oder zwischen dem Ausgangswellenleiter und dem zweiten Multimoden-Wellenleiter, um einen Übergang des Lichtsignals von dem Eingangswellenleiter zu dem ersten Multimoden-Wellenleiter und/oder von dem zweiten Multimoden-Wellenleiter zu dem Ausgangswellenleiter zu verbessern

Die Verwendung von MFW (Mehrmoden-Fokussierungswellenleiter) für eine optische Kopplung zwischen Chips oder anderen Komponenten stellt einen neuartigen Ansatz für ein seit langem bestehendes Problem dar. Das Potential von MFW für eine Fokussierung von Licht zur Erleichterung einer Chip-zu-Chip-Kopplung oder einer Chip-zu-Bauteil-Kopplung oder einer Bauteil-zu-Bauteil-Kopplung wurde bisher nicht ausgeschöpft. Wenn eine 3D-Fertigung möglich ist, können die beschriebenen MFW innerhalb der Chips oder der Bauteile hergestellt werden, die miteinander gekoppelt werden sollen. Nachfolgend wird nur beispielshaft von eine Chip1-zu-Chip2 Kopplung ausgegangen, wobei chip1/chip2 auch ein anderes Bauteil sein könnte.

Der erste MFW kann aus dem Wellenleitermaterial von Chip 1 hergestellt werden, während der zweite MFW aus dem Wellenleitermaterial von Chip 2 hegestellt werden kann. Diese Innovation macht zusätzliche Komponenten wie angebrachte Linsen oder gedruckte Drahtbonds überflüssig, was den Kopplungsprozess vereinfacht und die Systemkomplexität reduziert. Darüber hinaus ermöglicht der abstimmbare Entwurf der MFW eine präzise Kontrolle der Kopplungseffizienz bei verschiedenen Spaltlängen und bei beiden Polarisationen TE und TM, was eine Flexibilität bei der Integration in verschiedene Chipkonfigurationen bereitstellt. Durch die Nutzung von MFW für die optische Kopplung zwischen Chips kann der Montageprozess erheblich vereinfacht werden. Im Gegensatz zu herkömmlichen Verfahren, die eine akribische Ausrichtung für eine präzise Kopplung erfordern, reduzieren die inhärenten Fokussierungseigenschaften von MFW den Bedarf an hoher Präzision bei der Montage. Diese Charakteristik rationalisiert die Integration von Chips, wodurch die strengen Ausrichtungsanforderungen, die typischerweise mit der optischen Kopplung verbunden sind, entfallen. Dadurch wird die Montage effizienter und weniger fehleranfällig, was zu kürzeren Produktionszeiten und niedrigeren Herstellungskosten führt. Ob die Integration von Chips aus ähnlichen Materialien für eine homogene Integration oder die Kombination unterschiedlicher Materialien für eine heterogene Integration, MFW bieten eine vielseitige und effiziente Lösung für die Herausforderungen der optischen Kopplung in photonischen Systemen.

Der MFW basiert auf dem MMI-Wellenleiter, der auf Talbots Beobachtung von 1836 zurückgeht, später von Lord Rayleigh erklärt und von Bryngdahl und Ulrich weiterentwickelt wurde. Dieses Konzept umfasst das Selbstabbildungsphänomen, bei dem Interferenzeffekte wiederholbare Muster erzeugen. MMI-Bauelemente machen sich dieses Prinzip zunutze und verwenden in der Regel einen Plattenwellenleiter mit einem Einmoden-Abschnitt, der mit einem Mehrmodenabschnitt verbunden ist. Der Einmoden-Abschnitt wirkt als begrenzte Lichtquelle, während die interne Totalreflexion innerhalb des Mehrmodenabschnitts durch Mehrmodeninterferenz Selbstabbildungsmuster erzeugt.

MMI-Bauelemente bieten zahlreiche Vorteile, darunter einen einfachen Entwurf, Polarisationsunabhängigkeit und minimale Verluste, was dieselben ideal für verschiedene Anwendungen macht. MMI sind kompakt, einfach herzustellen und weisen wirklich herstellungstolerante Charakteristika auf. Sie finden Verwendung in WDM-Systemen, Mach-Zehnder-Interferometern und als effiziente Koppler, Splitter, Schalter und Filter.

Die Selbstabbildungstheorie, die der Mehmodeninterferenz MMI zugrunde liegt, ermöglicht die Wiederholung von Eingangssignalen in periodischen Abständen, was eine präzise Lichtfokussierung und -manipulation ermöglicht. Durch einen geeigneten Entwurf der MMI-Struktur des vorgeschlagenen Wellenleitersystems ist es möglich, die Interferenzmuster zu manipulieren, um Licht an bestimmten Stellen zu konzentrieren.

Durch sorgfältigen Entwurf des Wellenleitersystems konzentriert die maßgeschneiderte Interferenz das Licht auf das Ausgangsende des ersten MFW und die Eingangsfacette des zweiten MFW, d. h. in die Spaltregion. In diesem Abschnitt werden stehende Wellen erzeugt, die verhindern, dass der Strahl divergiert. Dieses Licht kann dann für verschiedene Anwendungen genutzt werden, z. B. für optisches Abtasten, Bilderzeugen oder Verstärken der Lichtintensität in bestimmten Bereichen. Mit der vorgeschlagenen Lösung kann eine effiziente Nutzung bei der optischen Kopplung erreicht werden.

Die derzeitigen Herstellungsverfahren können begrenzt sein, insbesondere abhängig von den verwendeten Gusswaren und Materialien. Um diese Beschränkungen zu adressieren, kann ein alternativer Ansatz ein Behandeln der MFW als zusätzliche Elemente und direktes Drucken derselben auf die Facetten der beiden Chips unter Verwendung fortschrittlicher Techniken wie Zwei-Photonen-Polymerisation umfassen. In diesem Fall kann der MFW mit oder ohne Umhüllung sein. Dieses Verfahren kann niedrige Einfügungsverluste und hohe Kopplungseffizienzen zwischen den Polymerwellenleitern und den Chipmaterialien bereitstellen. Durch den Einsatz solcher präzisen Fertigungstechniken ist es möglich, die Gesamtleistungsfähigkeit und die Integration der optischen Komponenten zu verbessern. MFW können im Vergleich zu gedruckten Mikrolinsen und photonischen Drahtbonds eine bessere Leistung erbringen, insbesondere wenn die Spaltlänge (Breite der Spaltregion) zwischen den beiden Chips oder den beiden Bauteilen berücksichtigt wird. Dies ist auf die Fähigkeit der MFW zurückzuführen, niedrige Einfügungsverluste und hohe Kopplungseffizienzen über größere Spaltabstände hinweg beizubehalten, was eine zuverlässige und effiziente optische Kommunikation zwischen den gekoppelten Chips gewährleistet.

Bevorzugte Ausführungsbeispiele der vorliegenden Erfindung werden nachfolgend Bezug nehmend auf die beiliegenden Zeichnungen detailliert erläutert. Es zeigen:

Fig. 1        ein schematisches Wellenleitersystem;

Fig. 2        ein schematisches Wellenleitersystem;

Fig. 3        ein schematisches Wellenleitersystem;

Fig. 4        ein schematisches Wellenleitersystem;

Fig. 5        ein schematisches Wellenleitersystem;

Fig. 6       ein schematisches Wellenleitersystem;

Fig. 7       eine normierte Übertragung eines vereinfachten MFW-Systems mit einem Eingangs-SiN-MFW und einem Ausgangs-Ormo-MFW, ohne adiabatische Verjüngungen und ohne Antireflexions-Beschichtungen;

Fig. 8       eine normierte Übertragung des vereinfachten MFW-Systems mit einem Eingangs-SiN-MFW und einem Ausgangs-Ormo-MFW, ohne adiabatische Verjüngungen und ohne Antireflexions-Beschichtungen.

Fig. 9       normierte Übertragung des MFW-Systems mit einem Eingangs-SiN-MFW und einem Ausgangs-Ormo-MFW, nur mit adiabatischen Verjüngungen und ohne Antireflexions-Beschichtungen

Fig. 10a, b       (a) MFW-System mit einem Eingangs-SiN-MFW und einem Ausgangs-Ormo-MFW, wobei die Simulation mit dem FDTD-Verfahren bei einer Spaltlänge von $20\,\mu m$ und einer Wellenlänge von $1,55\,\mu m$ durchgeführt wurde, und (b) die Ausbildung einer stehenden Welle des EM-Feldes in der Spaltregion;

Fig. 11       ein MFW-System mit einem Eingangs- und Ausgangspolymer-MFW, der auf die Facetten der gespaltenen Fasern gedruckt ist, wobei die Simulation mit dem EME-Verfahren bei einer Spaltlänge von $55\,\mu m$ und einer Wellenlänge von $1,55\,\mu m$ durchgeführt wurde und die 3D-Simulationen mit einer MFW-Länge von etwa einer halben Selbstabbildungslänge ($\sim\!946\,\mu m$) durchgeführt wurde;

Fig.12       ein MFW-System mit einem Eingangs- und Ausgangspolymer-MFW, der auf die Facetten der gespaltenen Fasern gedruckt ist, wobei die Simulation mit dem EME-Verfahren bei einer Spaltlänge von $55\,\mu m$ und einer Wellenlänge von $1,55\,\mu m$ durchgeführt wurde und die 3D-Simulationen mit einer MFW-Länge von etwa einer ganzen Selbstabbildungslänge ($\sim\!1947\,\mu m$) durchgeführt wurde;

Fig. 13       ein Ablaufschema eines Verfahren zum Herstellen eines Wellenleitersystems bzw. eines MFW-Systems; und

Fig. 14       ein Ablaufschema eines Verfahren zum Betreiben eines Wellenleitersystems bzw. eines MFW-Systems.

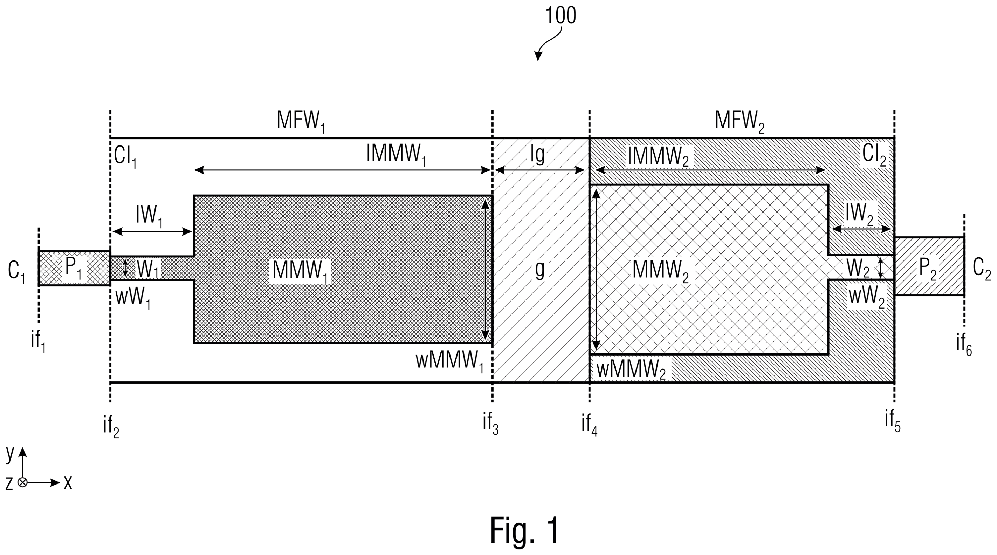

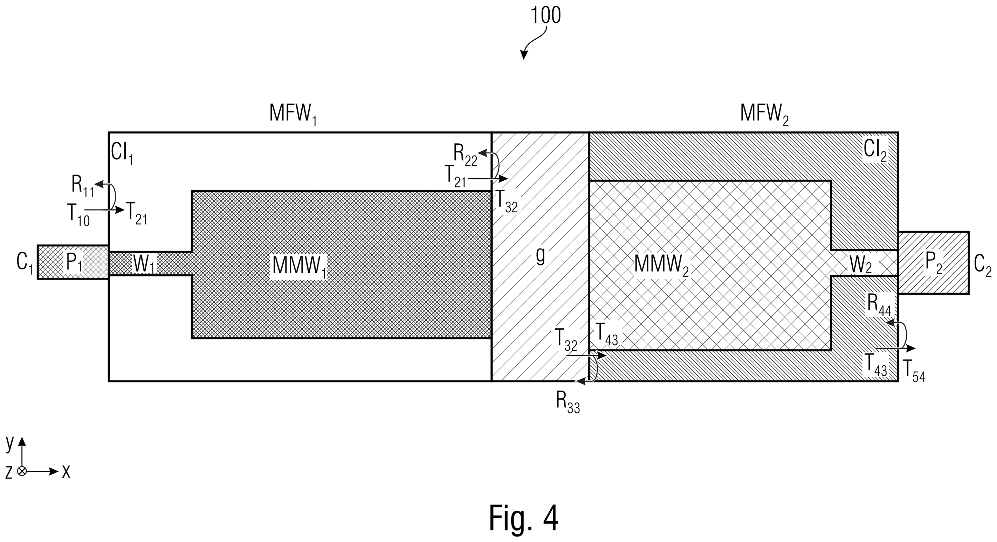

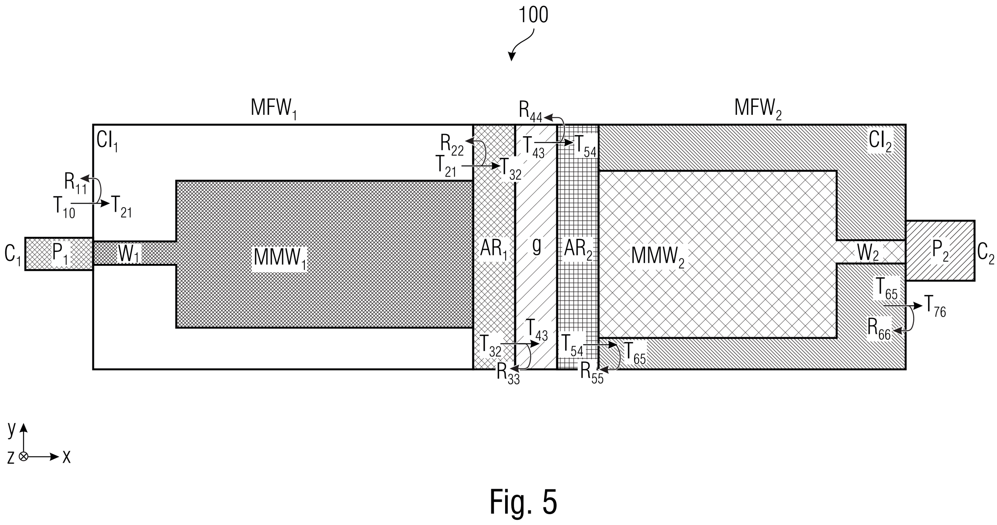

Einzelne Aspekte der hierin beschriebenen Erfindung sind nachfolgend in den Figuren 1 bis 14 beschrieben. In der vorliegenden Anmeldung betreffen gleiche Bezugszeichen gleiche oder gleichwirkende Elemente, wobei nicht alle Bezugszeichen in allen Zeichnungen, sofern sie sich wiederholen, erneut dargelegt sein müssen.

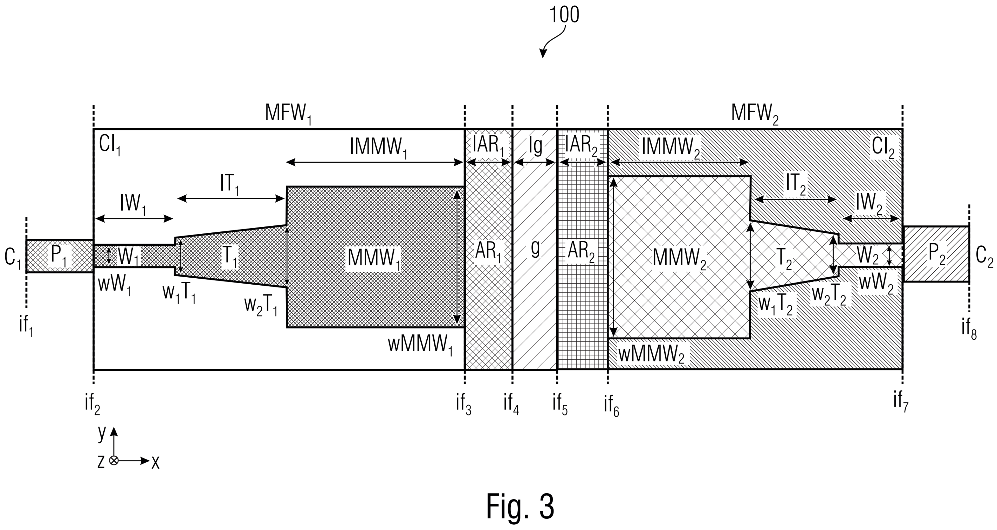

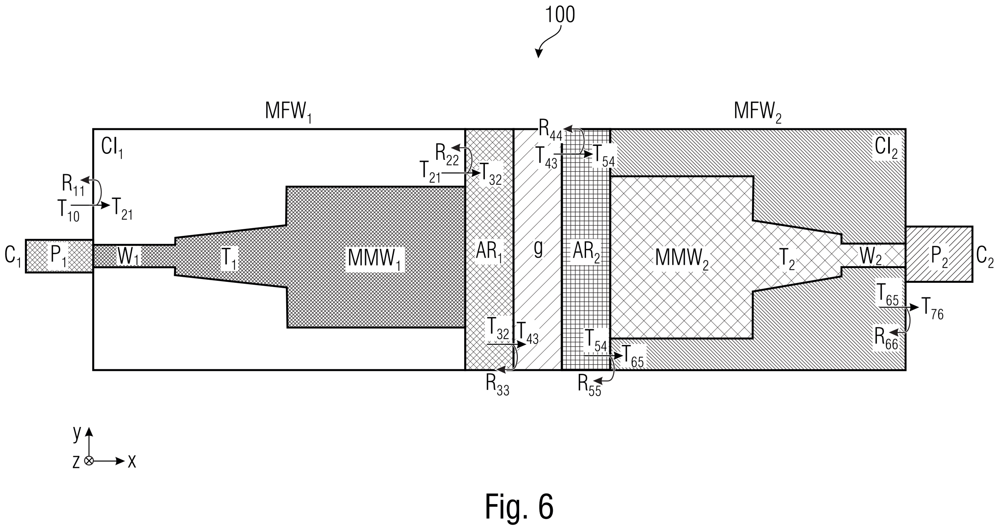

Wenn eine Komponente als "dazu ausgebildet ist, etwas zu tun" hierin beschrieben ist, soll es bedeuten, dass die Komponente entsprechend baulich und physikalisch so gestaltet worden ist, damit die Komponenten das was sie ausführen soll, auch auszuführt. Fig. 1 bis 6 zeigen jeweils schematisch verschiedene Ausgestaltungen eines vorgeschlagenen Wellenleitsystems, welche aus als MFW-System bezeichnet werden könnte. Das vorgeschlagene Wellenleitersystem 100 zum Leiten von Licht umfasst einen Eingangswellenleiter W1 zum Leiten einer einzelnen Mode eines Lichtsignals, einen ersten Multimoden-Wellenleiter MMW1 zum Leiten mehrerer verschiedener Moden des Lichtsignals, wobei der Eingangswellenleiter W1 und der Multimoden-Wellenleiter MMW1 miteinander verbunden sind. Außerdem umfasst das Wellenleitersystem 100 einen zweiten Multimoden-Wellenleiter MMW2 zum Leiten der mehreren verschiedenen Moden des Lichtsignals, und einen Ausgangswellenleiter W2 zum Ausleiten des Lichtsignals, wobei der Ausgangswellenleiter W2 und der zweite Multimoden-Wellenleiter MMW2 miteinander verbunden sind, wobei der Ausgangswellenleiter eine einzelne Mode des Lichtsignals ausleitet. Vorliegend ist mit dem Begriff "verbunden" entweder "direkt verbunden" (siehe Figs. 1, 2, 4 und 5) oder "über ein weiteres Element, insbesondere einen Wellenleiter T1, T2, verbunden" (siehe Figs. 3 und 6) gemeint. Das vorgeschlagene Wellenleitersystem 100 umfasst somit zwei gegenüberliegende Seiten, wobei jede Seite einen Eingangs- oder Ausgangswellenleiter W1, W2 und einen Multimoden-Wellenleiter MMW1, MMW2 umfasst. Die Kopplung dieser beiden Seiten ist Gegenstand der verschiedenen Ausgestaltungen des vorgeschlagenen Wellenleitersystems 100. Wesentlich für das Funktionieren der hierin beschriebenen Lehre, d.h. des vorgeschlagenen Wellenleitersystems 100 sind jedoch lediglich der Eingangswellenleiter W1, der ersten Multimoden-Wellenleiter MMW1, der zweite Multimoden-Wellenleiter MMW2 und der der Ausgangswellenleiter W2.

Zwischen dem Eingangswellenleiter W1 und dem ersten Multimoden-Wellenleiter MMW1 und/oder zwischen dem Ausgangswellenleiter W2 und dem zweiten Multimoden-Wellenleiter MMW2 kann ein adiabatischer kegelförmiger Wellenleiter T1, T2 angeordnet ist, welcher dazu ausgebildet ist, einen verlustarmen Übergang des Lichtsignals von dem Eingangswellenleiter W1 zu dem ersten Multimoden-Wellenleiter MMW1 und/oder von dem zweiten Multimoden-Wellenleiter MMW2 zu dem Ausgangswellenleiter W2 zu bewirken. Die Figs. 3 und 6 zeigen jeweils einen kegelförmigen Wellenleiter T1, T2 zwischen den Eingangs-/Ausgangswellenleiter W1, W2 und dem ersten/zweiten Multimoden-Wellenleiter MMW1, MMW2. Es ist aber auch denkbar, dass nur zwischen den Eingangswellenleiter W1 und dem ersten Multimoden-Wellenleiter MMW1 ein Kegelförmiger Wellenleiter T1 vorgesehen ist. Außerdem denkbar ist, dass nur zwischen dem Ausgangswellenleiter W2 und dem zweiten Multimoden-Wellenleiter MMW2 ein Kegelförmiger Wellenleiter T2 vorgesehen ist. Diese letzten beiden Möglichkeiten sind in den Figs. nicht dargestellt.

Der Eingangswellenleiter W1 und/oder der erste Multimoden-Wellenleiter MMW1 und/oder der zweite Multimoden-Wellenleiter MMW2 und/oder der Ausgangswellenleiter W2 kann eine kubische oder eine rechteckige oder eine zylindrische oder eine hexagonale oder eine oktogonale Geometrie oder dergleichen aufweisen. Denkbar ist im Wesentlichen jede Form(Geometrie), welche für die geplante Anwendung des Wellenleitersystems 100 erforderlich oder wünschenswert ist. Insbesondere kann jeder der genannten Wellenleiter W1, MMW1, MMW2 und W2 eine andere Form haben, d.h. denkbar ist, das die genannten Wellenleiter W1, MMW1, MMW2 und W2 jeweils eine andere Form (Geometrie) aufweisen. In den Figs. 1 bis 6 sind die Wellenleiter W1, MMW1, MMW2 und W2 zweidimensional gezeichnet. Bei einer realen Umsetzung des Wellenleitersystems sind die Wellenleiter W1, MMW1, MMW2 und W2 dreidimensional ausgebildet.

Die Wellenleiter W1, MMW1, MMW2 und W2 erstrecken sich beispielsweise entlang einer X-Achse. Die Erstreckung der Wellenleiter W1, MMW1, MMW2 und W2 ist hierin als geometrische Länge bezeichnet. Die geometrische Länge des Eingangswellenleiters W1 und des Ausganswellenleiters W2 kann bevorzugt einen Wert zwischen 1-100$\mu$m umfassen. Die Wellenleiter W1 und W2 können dieselbe Form haben. Es ist aber auch möglich, dass die unterschiedliche Formen aufweisen. Es ist ebenfalls denkbar, dass die Wellenleiter W1 und W2 unterschiedliche Längen aufweisen. Das gleiche gilt für den ersten und zweiten Multimoden-Wellenleiter MMW1 und MMW2. Die geometrische Länge des ersten und zweiten Multimoden-Wellenleiters MMW1 und MMW2 kann bevorzugt einen Wert zwischen 1-10000$\mu$m umfassen. Die kegelförmigen Wellenleiter T1, T2 können eine geometrische Länge IT1, IT2 mit einem Wert zwischen 1-1000$\mu$m aufweisen. Solange die kegelförmigen Wellenleiter T1, T2 einen Verjüngung aufweisen, können diese von der Grundform auch eine andere Formaufweisen.

Bevorzugt sind der erste Multimoden-Wellenleiter MMW1 und der zweite Multimoden-Wellenleiter MMW2 über eine Spaltregion g gekoppelt, wobei die Spaltregion g dazu ausgebildet ist, in der Spaltregion g eine stehende Welle aus dem Lichtsignal zu erzeugen. Die Spaltregion g ist eine Lücke g. Vorliegend bedeutet "die Spaltregion g ist dazu ausgebildet", dass die Lücke/Spaltregion g derart groß ist oder sich über einen Abstand erstreckt, dass sich in der Spaltregion g eine stehende Welle aus dem Lichtsignal ausbilden kann. Eine Spaltregion g ist in jeder der Figs. 1 bis 6 gezeigt. Es ist jedoch möglich, keine Spaltregion g vorzusehen. Jedoch funktioniert die vorgeschlagene technische Lehrer besser, wenn eine Spaltregion g vorgesehen ist. Insbesondere kann die Spaltregion g mit Luft oder mit einer Flüssigkeit gefüllt sein, insbesondere welche einen Brechungsindex aufweist, der zu einem Brechungsindex der Multimoden-Wellenleiter MMW1, MMW2 ähnlich ist.

Den Figs. 1 bis 6 ist jeweils zu entnehmen, dass der erste Multimoden-Wellenleiter MMW1 mit einem seiner Enden einem Ende des zweiten Multimoden-Wellenleiter MMW2 gegenüberliegend angeordnet ist. Den Figs . 2, 3, 5 und 6 kann ferner entnommen werden, dass die gegenüberliegenden Enden des ersten und der zweiten Multimodenleiters MMW1, MMW1 jeweils eine Anti-Reflexionsbeschichtung AR1, AR2 aufweisen können, um Strahlung, insbesondere Reflexionen, zu verringern. Die Anti-Reflexionsbeschichtung AR1, AR2 ist für die Umsetzung der vorgeschlagenen technischen Lehre nicht wesentlich, kann die Umsetzung der vorgeschlagenen technischen Lehre jedoch verbessern. Die Anti-Reflexionsbeschichtung AR1, AR2 kann dazu dienen, Strahlung in Form von Reflektionen in den Wellenleiten MMW1, MMW2 zu verringern. Die Anti-Reflexionsbeschichtungen AR1, AR2 erstrecken sich entlang eine Y-Achse (siehe Fig. 3 beispielsweise). Bevorzugt erstrecken sich die Anti-Reflexionsbeschichtungen AR1, AR2 bis zu einem Ende der Ummantelungen CI1, CI2. Insbesondere weisen die Anti-Reflexionsbeschichtungen AR1, AR2 eine Breite entlang der X-Richtung im Bereich eine Viertels (1/4) der Wellenlänge des Lichtsignales auf, welche benutzt wird. Bevorzugt werden Wellenlängen des Lichtsignales im Bereich 100nm bis 10000nm genutzt. Es ist aber auch denkbar, dass die Anti-Reflexionsbeschichtungen AR1, AR2 entlang der Y-Achse kürzer als die Ummantelungen CI1, CI2 in Y-Richtung sind. Bevorzugt sind die Ummantelungen CI1, CI2 so lang wie die Multimoden-Wellenleiter MMW1 und MMW2 in Y-Richtung breit sind. Das Gleiche gilt für die Spaltregion g, welche in Y-Richtung , in X-Richtung und in Z-Richtung jeweils ebenfalls eine Erstreckungslänge Ig aufweist.

Dem Fachmann ist klar, dass alle hierin beschriebenen geometrischen Längen jeweils eine Erstreckung in X-Richtung, Y-Richtung und Z-Richtung aufweisen.

Der erste Multimoden-Wellenleiter MMW1 und/oder der zweite Multimoden-Wellenleiter MMW2 weisen jeweils eine geometrische Länge IMMW1, IMMMW2 auf, welche einer halben Selbstabbildungslänge (Englisch: "half self imaging length") oder einer ganzen Selbstabbildungslänge oder ein ganzes Vielfaches der halben oder ganzen Selbstabbildungslänge entspricht, wodurch das Lichtsignal im Wesentlichen ohne Verlust von dem ersten Multimoden-Wellenleiter MMW1 in den zweiten Multimoden-Wellenleiter MMW1 übertritt.

Die halbe Selbstabbildungslänge entspricht einer Kopplungslänge Lc, bei welcher die Eingangsmode des Lichtsignals zwischen dem ersten Multimoden-Wellenleiter MMW1 und dem zweiten Multimoden-Wellenleiter MMW1 im Wesentlichen verlustlos übertragbar ist. Wenn keine Spaltregion g vorhanden ist, ist die Kopplungslänge Lc ist gegeben durch

$$L_c \approx \frac{2\pi}{(\beta_0 - \beta_2)},$$

wobei $\beta_0$ eine Ausbreitungskonstante einer Grundmode des Lichtsignals und $\beta_2$ eine Ausbreitungskonstante der höheren Moden des Lichtsignals ist.

Bei Vorhandensein der Spaltregion g zwischen dem ersten Multimoden-Wellenleiter MMW1 und dem zweiten Multimoden-Wellenleiter MMW2 ist gegeben die Kopplungslänge Lc ist gegeben durch

$$L_c \approx \frac{2\pi}{(\beta_0 - \beta_2)} \pm \delta,$$

wobei $\delta$ eine Offsetlänge ist. Die Offsetlänge $\delta$ ist die für die Korrektur der Bildebene erforderliche Versatzlänge, die aufgrund der Größe des Eingangslichtsignals (fundamentale Wellenleiterbreite), der Anzahl der angeregten Moden in dem Mehrmodenwellenleiter MMW1 sowie des Index des Materials in der Spaltregion g variiert.

Die ganze Selbstabbildungslänge entspricht folglich der doppelten Kopplungslänge Lc, bei welcher ein Bild des Lichtsignals der Eingangsmode sowohl in einem Bereich der Spaltregion g als auch in dem Ausgangswellenleiter W2 wiederhergestellt ist.

Wie den Figs. 1 bis 6 zu entnehmen ist, kann der Eingangswellenleiter W1 und der Ausgangswellenleiter W2 jeweils an einen ihrer Enden, welcher nicht mit dem entsprechenden Multimoden-Wellenleiter MMW1, MMW2 gekoppelt ist, mit einem Anschluss P1, P2 gekoppelt sein. Betrachtet man beispielsweise eine der Fig. 1 bis 6, so tritt das Lichtsignal beispielsweise durch den Anschluss P1 entlang der x-Ache in den Eingangswellenleiter W1 ein, durchläuft den ersten Multimoden-Wellenleiter MMW1, ggf. die Spaltregion g, den zweiten Multimoden-Wellenleiter MMW2 und anschließend den Anschluss P2. Über die Anschlüsse P1, P2 kann das Lichtsignal von einem ersten Chip C1 in einen zweiten Chip C2 gelangen.

Der Eingangswellenleiter W1 und der erste Multimoden-Wellenleiter MMW1 können von einer ersten Ummantelung CI1 umgeben sein, wobei der Ausgangswellenleiter W2 und der zweite Multimoden-Wellenleiter MMW2 von einer zweiten Ummantelung CI2 umgeben sein können. Insbesondere erstrecken sich die erste und/oder zweite Ummantelung CI1, CI2 entlang des Eingangswellenleiter W1 und des ersten Multimoden-Wellenleiters MMW1 bzw. entlang des Ausgangswellenleiter W2 und des zweiten Multimoden-Wellenleiters MMW2, insbesondere entlang der x-Achse, der y-Achse und der z-Achse.(siehe Figs. 1 bis 6). Ein Material der ersten Ummantelung CI1 kann einem Material der zweiten Ummantelung CI2 entsprechen oder das Material der ersten Ummantelung CI1 kann ein anderes Material als das Material der zweiten Ummantelung CI2 sein.

Wie in den Figs. 1 bis 6 gezeigt ist, können die Anschlüsse P1, P2 mit jeweils einen Chip C1, C2 koppelbar oder gekoppelt sind. Die Anschlüsse P1, P2 könnten auch mit einem anderen Bauteil koppelbar oder gekoppelt sein. Aus Gründen der Einfachheit wurde in den Fig. 1 bis 6 nur ein Bauteil/Chip durch das Bezugszeichen C1, C2 angedeutet.

Beispielsweise kann bei einer Wellenlänge von 1,55 μm des Lichtsignals die Spaltregion g eine Breite Ig oder Erstreckung Ig zwischen dem ersten und dem zweiten Multimoden-Wellenleiter MMW1, MMW2 von 0μm bis 60μm aufweisen.

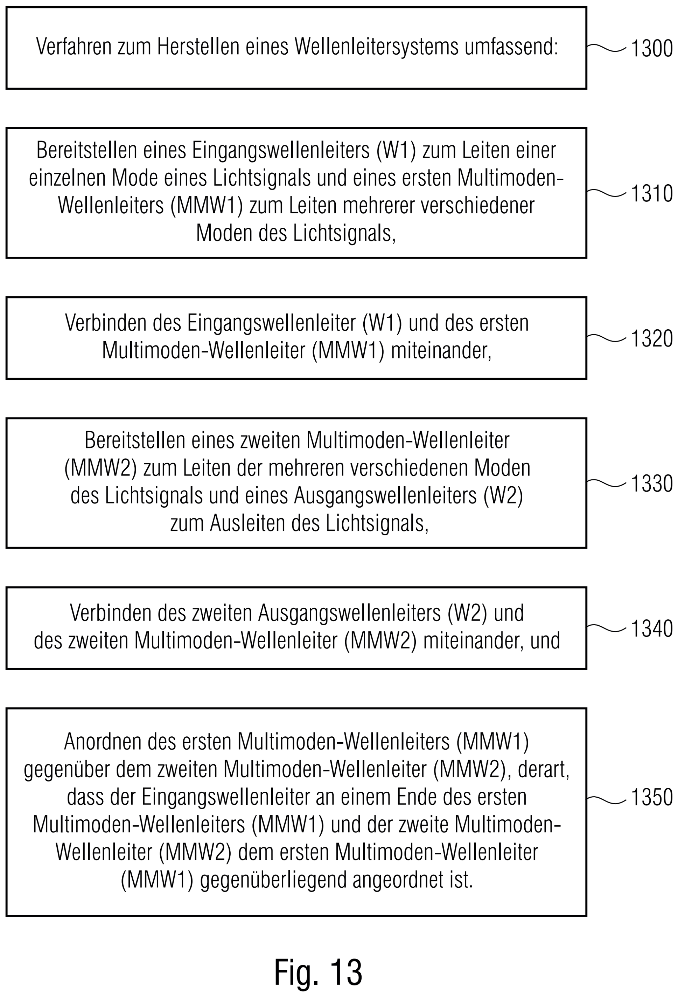

Ein weiterer Aspekt der vorliegenden Erfindung betrifft ein Verfahren 1300 zum Herstellen eines soeben beschriebenen Wellenleitersystems 100. Das Ablaufschema des Verfahrens 1300 ist in Fig. 13 gezeigt. Das Verfahren 1300 umfasst in Schritt 1310 ein Bereitstellen eines Eingangswellenleiters W1 zum Leiten einer einzelnen Mode eines Lichtsignals und eines ersten Multimoden-Wellenleiters MMW1 zum Leiten mehrerer verschiedener Moden des Lichtsignals. In Schritt 1320 umfasst das Verfahren 1300 ein Verbinden des Eingangswellenleiter W1 und des ersten Multimoden-Wellenleiter MMW1 miteinander. Der Eingangswellenleiter W1 und der erste Multimoden-Wellenleiter MMW1 sind , wie auch in Figs. 1, 2, 4 und 5 zu sehen ist, direkt miteinander verbunden, während Figs. 3 und 6 zeigen, dass Eingangswellenleiter W1 und der erste Multimoden-Wellenleiter MMW1 über einen weiteren Wellenleiter T1 miteinander verbunden sind. Das Verfahren 1300 umfasst in Schritt 1340 ein Bereitstellen eines zweiten Multimoden-Wellenleiter MMW2 zum Leiten der mehreren verschiedenen Moden des Lichtsignals und eines Ausgangswellenleiters W2 zum Ausleiten des Lichtsignals. In Schritt 1350 umfasst das Verfahren 1300 ein Verbinden des zweiten Ausgangswellenleiters W2 und des zweiten Multimoden-Wellenleiter MMW2 miteinander, und in Schritt 1360 umfasst das Verfahren 1300 ein Anordnen des ersten Multimoden-Wellenleiters MMW1 gegenüber dem zweiten Multimoden-Wellenleiter MMW2, derart, dass der Eingangswellenleiter an einem Ende des ersten Multimoden-Wellenleiters MMW1 und der zweite Multimoden-Wellenleiter MMW2 dem ersten Multimoden-Wellenleiter MMW1 gegenüberliegend angeordnet ist. Die Schritte 1310, 1320 und 1340 und 1350 werden paarweise zeitlich hintereinander oder zweitgleich ausgeführt. Der Schritt 1360 wird bevorzugt als letzter Schritt ausgeführt. Das Vorsehen einer Spaltregion g ist nicht zwingend.

Das Verfahren 1300 kann weitere Schritte umfassen. Beispielsweise kann das Verfahren 1300 ein Anordnen des ersten Multimoden-Wellenleiters MMW1 gegenüber dem zweiten Multimoden-Wellenleiter MMW2 um eine Spaltregion g beabstandet zueinander. Die Spaltregion ist als bevorzugtes Ausführungsbeispiel in den Figs. 1 bis 6 gezeigt.

**EP 4 779 372 A1**

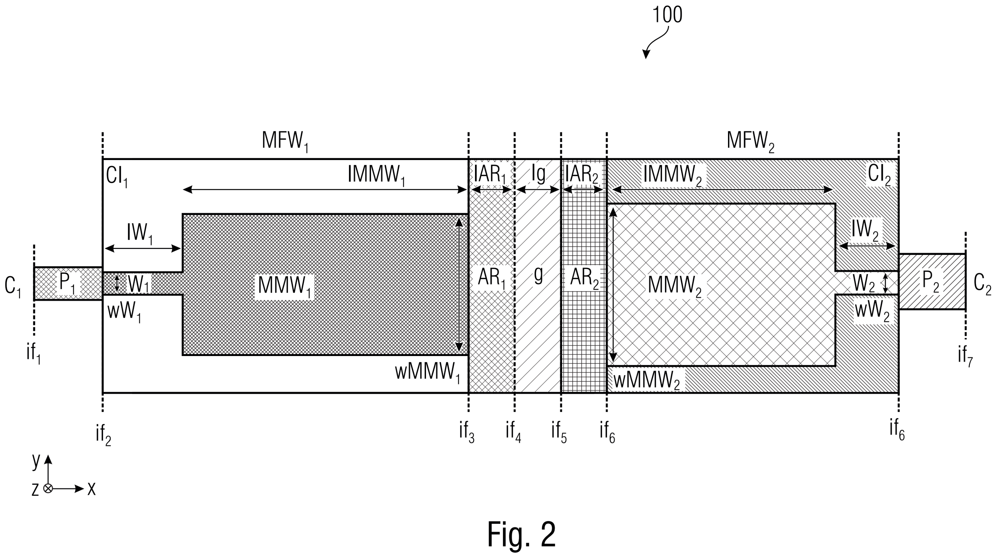

Alternativ oder zusätzlich kann das Verfahren 1300 ein Beschichten einer Endoberfläche des ersten Multimoden-Wellenleiters MMW1 mit einer AR1-Beschichtung AR1 (erste Anti-reflexionsbeschichtung) und/oder des zweiten Multimoden-Wellenleiters MMW2 mit einer AR2-Beschichtung AR2 (zweite Antireflexionsbeschichtung), wobei die beschichtete Endoberfläche des entsprechenden Multimoden-Wellenleiters MMW1, MMW2 jene ist, welche dem anderen Multimoden-Wellenleiters MMW1, MMW2 gegenüberliegend angeordnet wird. Antireflexionsbeschichtungen AR1, AR2 sind beispielsweise in Figs. 2, 3, 5 und 6 gezeigt. Die Antireflexionsbeschichtung AR1, AR2 ist somit nur eine Option um das vorgeschlagenen Wellenleitersystem auszubilden. Es ist ferner Denkbar, nur eine Antireflexionsbeschichtung AR1, AR2 vorzusehen. Außerdem können die Antireflexionsbeschichtungen AR1, AR2 aus demselben oder aus zwei unterschiedlichen Materialien bestehen.

Alternativ oder zusätzlich kann das Verfahren 1300 ein Anordnen mindestens eines adiabatischen kegelförmigen Wellenleiter T1, T2 zwischen dem Eingangswellenleiter W1 und dem ersten Multimoden-Wellenleiter MMW1 und/oder zwischen dem Ausgangswellenleiter W2 und dem zweiten Multimoden-Wellenleiter MMW2 umfassen, um einen Übergang des Lichtsignals von dem Eingangswellenleiter W1 zu dem Multimoden-Wellenleiter MMW1 und/oder von dem zweiten Multimoden-Wellenleiter MMW2 zu dem Ausgangswellenleiter W2 verlustarm zu bewirken. Kegelförmige Wellenleiter T1, T2 sind beispielsweise in den Figs. 3 und 6 zu sehen, wobei die beiden Endflächen des kegelförmigen Wellenleitern T1, T2 derart zwischen dem Eingangswellenleiter W1 und dem ersten Multimoden-Wellenleiter MMW1 und/oder zwischen dem Ausgangswellenleiter W2 und dem zweiten Multimoden-Wellenleiter MMW2 angeordnet sind, dass eine Verjüngung der drei Wellenleiter W1, T1 uns MMW1 bzw. der Wellenleiter MMW2, T2 und W2 in einer Erstreckungsrichtung erfolgt. In der Erstreckungsrichtung entlang der x-Achse weisen die kegelförmigen Wellenleiter T1, T2 eine Länge IT1, IT2 jeweils auf.

Alternativ oder zusätzlich kann das Verfahren 1300 ein Ummanteln des Eingangswellenleiters W1 und des ersten Multimoden-Wellenleiters MMW1 mit einer ersten Ummantelung CL1 und/oder des zweiten Multimoden-Wellenleiters MMW2 mit einer zweiten Ummantelung CL2 umfassen, um Strahlung, insbesondere Reflexionen, zu reduzieren. Die Figs. 1 bis 6 zweigen jeweils eine Ummantelung CI1, CI2, wobei selbst die Umgebungsluft schon als Ummantelung interpretiert werden könnte. Die Ummantelungen CI1 und CI2, können aus demselben oder aus zwei unterschiedlichen Materialien bestehen.

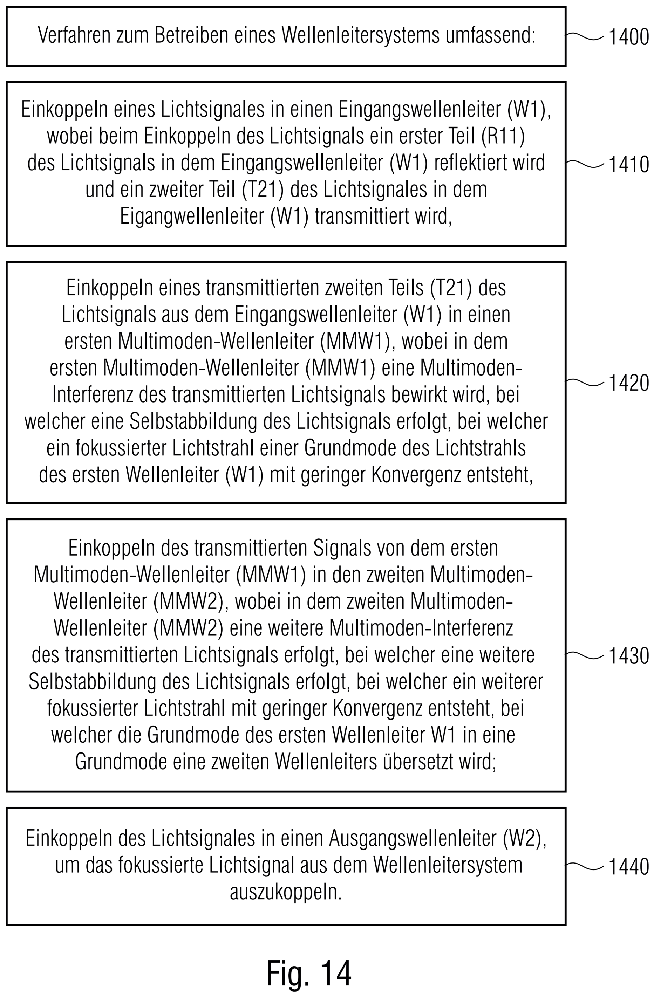

Ein weiterer Aspekt der vorliegenden Erfindung betrifft ein Verfahren 1400 zum Betreiben eines Wellenleitersystems. Ein Ablaufschema des Verfahren 1400 ist in Fig. 14 gezeigt. Das Verfahren 1400 umfasst in Schritt 1410 ein Einkoppeln eines Lichtsignales, insbesondere aus einem ersten Chip C1, in einen Eingangswellenleiter W1, wobei beim Einkoppeln des Lichtsignals ein erster Teil R11, insbesondere 0-5 %, des Lichtsignals in dem Eingangswellenleiter W1 reflektiert wird und ein zweiter Teil T21, insbesondere 0-95 %, des Lichtsignales in dem Eigangwellenleiter W1 transmittiert wird. In Schritt 1420 umfasst das Verfahren 1400 ein Einkoppeln eines transmittierten zweiten Teils T21 des Lichtsignals aus dem Eingangswellenleiter W1 in einen ersten Multimoden-Wellenleiter MMW1, wobei in dem ersten Multimoden-Wellenleiter MMW1 eine Multimoden-Interferenz des transmittierten Lichtsignals bewirkt wird, bei welcher eine Selbstabbildung des Lichtsignals erfolgt, bei welcher ein fokussierter Lichtstrahl einer Grundmode des Lichtstrahls des ersten Wellenleiter W1 mit geringer Konvergenz entsteht.. Das Verfahren 1400 umfasst ferner ein Einkoppeln des transmittierten Signals von dem ersten Multimoden-Wellenleiter MMW1 in den zweiten Multimoden-Wellenleiter MMW2, wobei in dem zweiten Multimoden-Wellenleiter MMW2 eine weitere Multimoden-Interferenz des transmittierten Lichtsignals erfolgt, bei welcher eine weitere Selbstabbildung des Lichtsignals erfolgt, bei welcher ein weiterer fokussierter Lichtstrahl mit geringer Konvergenz entsteht, bei welcher die Grundmode des ersten Wellenleiter W1 in eine Grundmode eine zweiten Wellenleiters übersetzt wird. In Schritt 1440 umfasst das Verfahren 1400 schließlich ein Einkoppeln des Lichtsignales in einen Ausgangswellenleiter W2, um das fokussierte Lichtsignal aus dem Wellenleitersystem 100 auszukoppeln, insbesondere um das fokussierte Licht in einen zweiten Chip C2 einzukoppeln. Die Schritte 1410 bis 1440 erfolgen zeitlich hintereinander. Das Vorsehen einer Spaltregion g ist nicht zwingend.

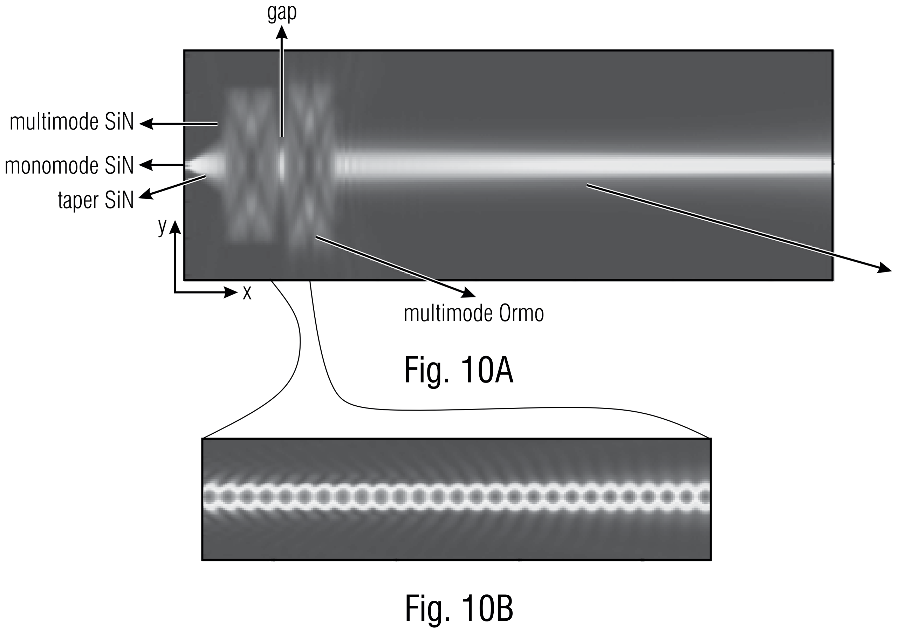

Das Verfahren 1400 kann weitere Schritte umfassen. Beispielsweise kann das Verfahren 1400 ein Einkoppeln des Lichtsignals von dem ersten Multimoden-Wellenleiter MMW1 in eine Spaltregion g zwischen dem ersten Multimoden-Wellenleiters MMW1 und dem zweiten Multimoden-Wellenleiter MMW2. Siehe Figs. 10 bis 12. Die Spaltregion ist als bevorzugtes Ausführungsbeispiel in den Figs. 1 bis 6 gezeigt.

Alternativ oder zusätzlich kann das Verfahren 1400 ein Einkoppeln des Lichtsignals von dem ersten Multimoden-Wellenleiters MMW1 in eine erste Antireflexionsbeschichtung AR1 an einer Endoberfläche des ersten Multimoden-Wellenleiters MMW1, um Strahlung, insbesondere eine Reflexion, zurück in den ersten Multimoden-Wellenleiters MMW1 zu verringern. Alternativ oder zusätzlich kann das Verfahren 1400 ein Einkoppeln des Lichtsignals in eine zweite Antireflexionsbeschichtung AR2 an einer Endoberfläche des zweiten Multimoden-Wellenleiters MMW1, um Strahlung, insbesondere eine Reflexion, zurück in den ersten Multimoden-Wellenleiter MMW1 oder in die Spaltregion g zu verringern. Das bereits Offenbarte zu den Antireflexionsbeschichtungen wird aus Redundanzgründen hier nicht wiederholt. Stattdessen wird hiermit darauf Bezug genommen.

Alternativ oder zusätzlich kann das Verfahren 1400 ein Einkoppeln des Lichtsignals in einen adiabatischen kegelförmigen Wellenleiter T1, T2 zwischen dem Eingangswellenleiter W1 und dem ersten Multimoden-Wellenleiter

MMW1 und/oder zwischen dem Ausgangswellenleiter W2 und dem zweiten Multimoden-Wellenleiter MMW2, um einen Übergang des Lichtsignals von dem Eingangswellenleiter W1 zu dem ersten Multimoden-Wellenleiter MMW1 und/oder von dem zweiten Multimoden-Wellenleiter MMW2 zu dem Ausgangswellenleiter W2 zu verbessern.

Nachfolgend werden in Zusammenschau der Figuren einzelne Aspekte beispielhaft detaillierter beschrieben.

**Beschreibung des Mehrmoden-Fokussierungswellenleiters**

Der Mehrmoden-Fokussierungswellenleiter (MFW; MFW = Multimode Focusing Waveguide) ist eine innovative Anwendung des Phänomens der Mehrmodeninterferenz (MMI; MMI = multimode interference), die speziell für eine effiziente optische Kopplung zwischen Bauteilen, insbesondere photonischen Chips, entwickelt wurde. Der MFW besteht aus einem Einmoden-Wellenleiter W1, W2, der mit einer Mehrmodenregion MMW1, MMW2 verbunden ist. In 3D kann die Geometrie des Wellenleiters (Grund- und Mehrmodenabschnitte) kubisch, rechteckig oder sogar zylindrisch oder eine andere beliebige Geometrie aufweisen. Zusätzlich kann zwischen dem Eingangswellenleiter W1 und dem Mehrmodenabschnitt MMW1 eine adiabatische Verjüngung T1 verwendet werden, um einen besseren Modenübergang von dem Eingangsabschnitt W1 zu dem Mehrmodenabschnitt MMW1 zu ermöglichen. In ähnlicher Weise kann eine inverse Verjüngung zwischen dem Mehrmodenabschnitt MMW2 und dem Ausgangswellenleiter W2 verwendet werden, um den Modenübergang von dem Mehrmodenabschnitt MMW2 zu dem Ausgangswellenleiter W2 zu verbessern. Außerdem können auf beiden Endoberflächen der Mehrmodenabschnitte MMW1, MMW2 Antireflexionsbeschichtungen /AR-Beschichtungen aufgebracht werden, die zur Verringerung von Reflexionen beitragen.

Innerhalb dieser Mehrmodenregion erzeugt die Lichtausbreitung aufgrund des Mehrmoden-Interferenzeffekts Moden höherer Ordnung. Hier ist zu beachten, dass der MFW bei verschiedenen Längen funktionieren kann. Erstens bei der halben selbstabbildenden Länge, bei der das Bild der Eingangsmode an dem Ausgangswellenleiter wiederholt wird. Zweitens bei der selbstabbildenden Länge, bei der das Bild der Eingangsmode zuerst in der Spaltregion gesehen und dann an dem Ausgangswellenleiter wiederholt wird. Bei Anwendungen, bei denen die Minimierung des Platzbedarfs von entscheidender Bedeutung ist, kann die Nutzung der halben Selbstabbildungslänge besonders vorteilhaft sein. Der gleiche Effekt tritt bei ganzzahligen Vielfachen dieser Längen auf, sei es bei ganzzahligen Vielfachen der halben Selbstabbildungslänge oder der Selbstabbildungslänge selbst. Durch strategisches Schneiden des MMI-Abschnitts bei diesen bestimmten Längen kann das Licht vom ersten Chip kreuzen, durch einen definierten Spalt mit minimaler Divergenz verlaufen, wodurch sichergestellt wird, dass das optische Signal seine Integrität behält, und schließlich ohne hohe Einfügungsverluste zu dem zweiten Chip kreuzen.

Die halbe Selbstabbildungslänge entspricht der Kopplungslänge $L_c$, bei der die Eingangsmode effektiv zwischen den Wellenleitern W1, MMW1, MMW2, W2 übertragen wird. Folglich ist die Selbstabbildungslänge doppelt so lang wie die Kopplungslänge $L_c$, wodurch sichergestellt wird, dass das Bild der Eingangsmode sowohl an der Spaltregion g als auch dem Ausgangswellenleiter W2 präzise wiederhergestellt wird.

Um Wiederholungen zu vermeiden, umfasst die hier weitere gegebene Beschreibung des Mehrmoden-Fokussierungswellenleiter(MFW)-Systems 100 die zusätzlichen adiabatischen Verjüngungen T1, T2 sowie die AR-Beschichtungen AR1, AR2, welche aber nicht zwingend erforderlich sind. Die Funktionsweise kann mit Bezug auf die Figuren 1 bis 12 wie folgt beschrieben werden:

Licht beginnt in Chip 1, $C_1$ platziert in der Umhüllung $Cl1$, und tritt durch einen Anschluss 1 in das MFW-System 100 ein. Von dem ersten Anschluss $P_1$ tritt dasselbe in den ersten Wellenleiter $W_1$ ein, der eine Breite $wW_1$ und eine Länge $lW_1$ aufweist (Siehe Figs. 1 bis 6). Wenn das Licht in den Eingangswellenleiter $W_1$ eintritt, gibt es eine Reflexion $R_{11}$ und eine Übertragung $T_{21}$.

Anschließend bewegt sich das Licht vom Eingangswellenleiter $W_1$ zu der ersten Verjüngung $T_1$,d.h. erster kegelförmiger Wellenleiter T1, die eine Anfangsbreite $w_1T_1$ und eine Länge $lT_1$ aufweist. Die erste Verjüngung $T_1$ dehnt die Grundmode auf eine Breite $w_2T_1$ aus. Diese adiabatische Verjüngung ermöglicht einen sanften Übergang der Mode in den Mehrmoden-Wellenleiterabschnitt $MMW_1$ mit minimalem Verlust. $MMW_1$ hat eine Breite $wMMW_1$ und eine Länge $lMMW_1$. Innerhalb von $MMW_1$ tritt Mehrmodeninterferenz auf, und nach etwa der doppelten Kopplungslänge $L_c$ tritt Selbstabbildung auf, wodurch ein fokussierter Strahl mit minimaler Divergenz erzeugt wird.

Die Endfläche von $C_1$'s $MFW_1$ ist mit einer Antireflexionsschicht $AR_1$ der Länge $lAR_1$ beschichtet, die unter Verwendung des effektiven Index von $C_1$ und des umgebenden Spaltmediums berechnet wird, wobei die Länge ein Viertel der Wellenlänge der Lichtsignals beträgt, um Reflexionen zu minimieren. An dieser Grenzfläche gibt es eine Reflexion $R_{22}$ und eine Übertragung $T_{32}$ in die $AR_1$-Region. Nach $AR_1$ tritt das Licht in die Spaltregion g ein, die eine Länge $lg$ aufweist und mit Luft oder einer indexangepassten Flüssigkeit gefüllt sein kann. In diesem Spalt g oder Spaltregion g wird das halbe Selbstabbild oder das Selbstabbild der Mode von dem ersten Wellenleiter W1 beibehalten, mit einer Übertragung $T_{43}$ und Reflexion $R_{33}$.

Das Licht trifft dann auf die zweite $AR$ Beschichtung, $AR_2$, auf die Endoberfläche von zweiten Chip $C_2$, wobei $MFW_2$ in $Cl_2$ platziert ist. Die Länge $lAR_2$ dieser Beschichtung reduziert, insbesondere minimiert, in ähnlicher Weise die Reflexionen, mit einer Übertragung $T_{54}$ in $AR_2$ und einer Reflexion $R_{44}$ an dieser Grenzfläche. $AR_2$ trägt zur Verringerung

EP 4 779 372 A1

der Reflexionen von $C_2$ zurück in $C_1$ bei. Nach $AR_2$ tritt das Licht in den Mehrmodenabschnitt von $C_2$, d.h. in $MMW_2$, ein, der eine Länge $lMMW_2$ und Breite $wMMW_2$ aufweist. Innerhalb von $MMW_2$ tritt erneut Mehrmodeninterferenz auf, die das Selbstabbild der Grundmode von $W_1$ von $C_1$ zu der Grundmode von $W_2$ von $C_2$ übersetzt. Die Übertragung in $MMW_2$ ist $T_{65}$ und die Reflexion von dieser Grenzfläche ist $R_{55}$.

Nach $MMW_2$ kann das Licht durch eine inverse adiabatische Verjüngung T2 verlaufen, die mit einer Breite $w_1 T_2$ und Länge $lT_2$ beginnen kann und sich zu einer Breite $w_2 T_2$ verjüngen kann. Diese Verjüngung begrenzt die Mode in die Grundmode von $W_2$ von $C_2$, die eine Breite $wW_2$ und Länge $lW_2$ aufweist. Schließlich tritt das Licht durch den Anschluss, $P_2$, aus, mit einer Übertragung $T_{76}$ und einer Reflexion $R_{66}$.

Jede Region in dem optischen MFW-Kopplungssystem 100 ist so entworfen, dass der Licht-übergang mit minimalen Verlusten und Reflexionen erfolgt, wodurch eine effiziente optische Kopplung zwischen den beiden Bauteilen, insbesondere zwischen den Chips, sichergestellt wird.

Vor der Durchführung optischer Simulationen, die sehr rechenintensiv sein können, sowohl bei homogenen als auch heterogenen Systemen, können einige Schritte durchgeführt werden.

Zunächst wird die Selbstabbildungslänge wie folgt berechnet:

$$L_c \approx \frac{2\pi}{(\beta_0 - \beta_2)} \qquad (1)$$

Und die Hälfte der Selbstabbildungslänge als:

$$L_c \approx \frac{\pi}{(\beta_0 - \beta_2)} \qquad (2)$$

wobei, $\beta_0$ die Ausbreitungskonstante der Grundmode ist und $\beta_2$ die Ausbreitungskonstante der Mode höherer Ordnung ist.

Bei Vorhandensein eines Spalts g, d. h. einer Störung des vorgenannten Systems in Form einer Spaltregion g, kann die modifizierte Selbstabbildungslänge in jedem Fall wie folgt geschrieben werden:

$$L_c \approx \frac{2\pi}{(\beta_0 - \beta_2)} \pm \delta \qquad (3)$$

$$L_c \approx \frac{\pi}{(\beta_0 - \beta_2)} \pm \delta \qquad (4)$$

wobei, $\delta$ die für die Korrektur der Bildebene erforderliche Versatzlänge ist, die aufgrund der Größe des Eingangsstrahls (fundamentale Wellenleiterbreite), der Anzahl der angeregten Moden in dem Mehrmodenwellenleiter sowie des Index des Materials in der Spaltregion variiert.

Die durchgeführten 2D/3D-Simulationen können durch die Verwendung der Simulationssoftware ANSYS Numerical FDTD sowie durch EME-Simulationen unterstützt werden.

Hier wird das erste Bauteil, insbesondere Chip $C_1$, zu Demonstrationszwecken als Chip auf SiN-Basis mit einer $SiO_2$-Umhüllung betrachtet. Andererseits wird Chip $C_2$ zu Demonstrationszwecken als OrmoCore-Wellenleiter aus Polymermaterial und mit einer OrmoClad-Umhüllung angesehen. Beispielsweise bei einer Wellenlänge von 1,55$\mu$m sind die verwendeten Brechungsindizes $n_{SiN}$ = 1,9963, $n_{SiO2}$ = 1,444, $n_{OrmoCore}$ = 1,535, $n_{OrmoClad}$ = 1,517. Es sei darauf hingewiesen, dass jedes andere Material zur Beschreibung der beiden Chips 1 und 2, $C_1$ und $C_2$, verwendet werden kann.

In der Anfangsphase der Studie der Erfinder wurde ein vereinfachtes MFW-System 100 eingeführt, das nur aus einem Grundmodenwellenleiter W1 und einem Mehrmodenwellenleitern MMW1 besteht, wobei bewusst die Komplexität weglassen wurde, die durch Verjüngungen T1, T2 und Antireflexionsbeschichtungen AR1, AR2 eingeführt wird. Mit dieser vereinfachten Konfiguration kann gezeigt werden, dass die Kernfunktionalität des MFW-Systems 100 auch ohne diese zusätzlichen Komponenten intakt bleibt. Durch Konzentration auf die grundlegenden Aspekte wird beobachtet, dass der primäre Kopplungsmechanismus erhalten bleibt, obwohl es subtile Schwankungen bei der Kopplungseffizienz geben kann. Diese Unterschiede ergeben sich aus dem Fehlen der verjüngungsinduzierten Modenanpassung und der Verringerung der Reflexionsverluste durch AR-Beschichtungen. Darüber hinaus werden durch den Ausschluss von AR-Beschichtungen in EME-Simulationen (EME = Eigenmode Expansion = Eigenmodenausdehnung) die Rechenkosten erheblich gesenkt, was die Analyse effizienter macht und gleichzeitig wertvolle Einblicke in das Systemverhalten liefert. Vor der Durchführung der Simulationen werden die Kopplungslängen sowohl theoretisch als auch numerisch berechnet, und die Selbstabbildungslänge $L_c$ wird abgeleitet.

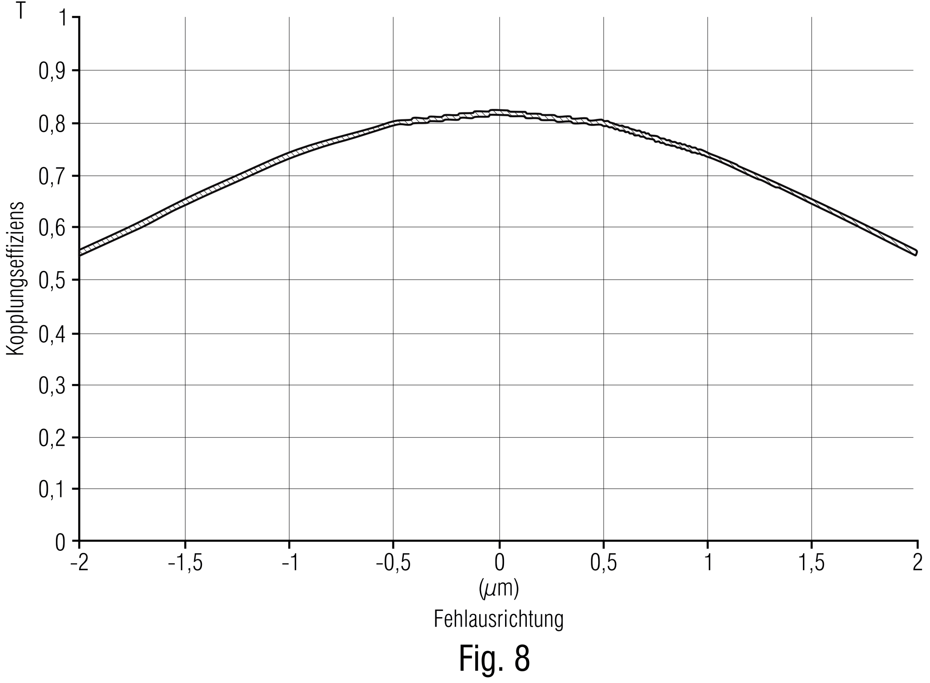

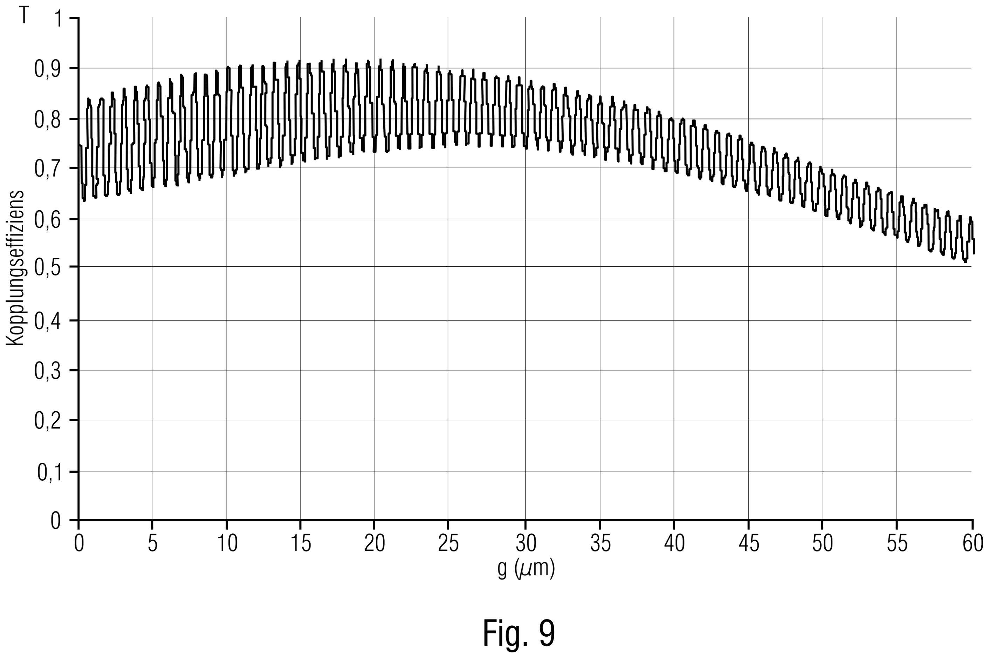

Mit diesen vorläufigen Berechnungen konnte der positive Effekt einer, insbesondere zentralen, Spaltlänge g, gezeigt werden. Besonders vorteilhaft erwies sich in diesem Fall eine Spaltlänge g von 20μm. Bei anderen Anfangsbedingungen können sich andere Spaltlängen g als vorteilhaft erweisen. Nach dieser Entscheidung wurden die Längen der Mehrmodenabschnitte variiert, um die optimalen Längen für eine effiziente Kopplung zu ermitteln. Ein abschließender Durchlauf der Spaltlänge, der von 0 bis 60 μm reicht, wurde durchgeführt, um die Leistung des Systems umfassend zu analysieren. Die Ergebnisse dieser Simulationen sind in Fig. 9 gezeigt. Fig. 8 zeigt die Auswirkungen der Spaltlängenschwankungen auf die Kopplungseffizienz T und die Gesamtfunktionalität des MFW-Systems 100.

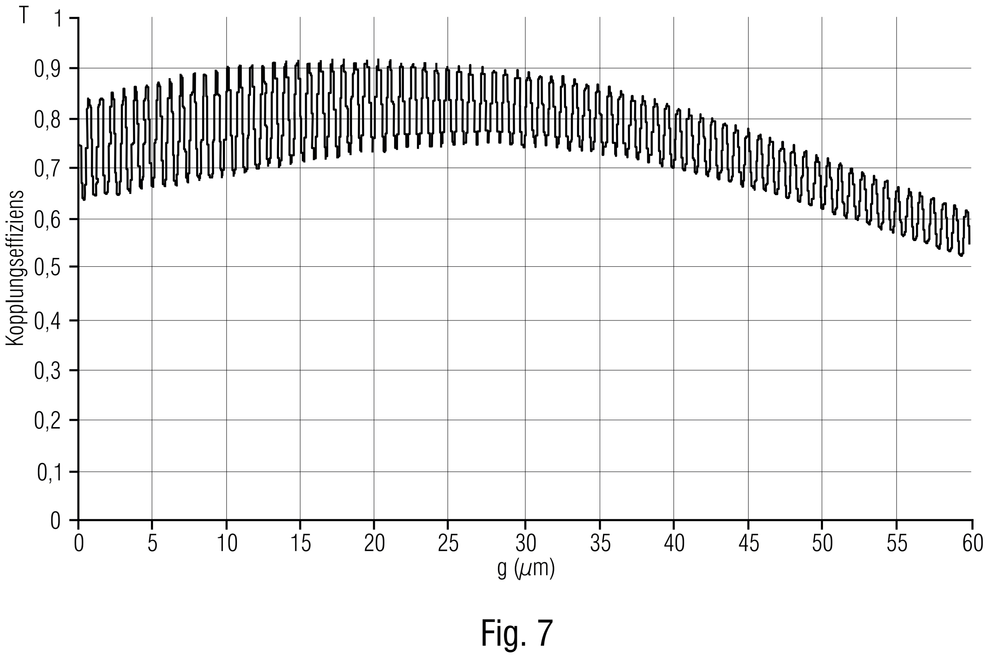

Fig. 7 zeigt die normierte Übertragung T des vereinfachten MFW-Systems 100 mit einem Eingangs-SiN-MFW und einem Ausgangs-Ormo-MFW, ohne adiabatische Verjüngungen und AR-Beschichtungen. Die Simulation wurde mit dem EME-Verfahren bei einer Spaltschwankung zwischen 0μm und 60μm und einer Wellenlänge von 1,55μm durchgeführt.

Die Analyse der Übertragung T in Bezug auf die Spaltlänge g zeigt, dass die höchste Übertragung bei etwa 20μm auftritt, wodurch eine optische Kopplung von etwa 85% erreicht wird. Wenn die Spaltlänge von diesem optimalen Punkt abweicht, nimmt die Übertragung allmählich ab. Bei einer Spaltlänge von 0 μm liegt die Übertragung bei ungefähr 75 % und bei 60 μm bei 55 %. Dieser Rückgang kann durch Optimieren der Selbstabbildungslänge, d. h. der Länge der Mehrmodenabschnitte, erheblich gemildert werden.

Bei der praktischen Implementierung von Wellenleitersystemen 100 ist das Verständnis der Auswirkungen von seitlichen Fehlausrichtungen von entscheidender Bedeutung, wo geringfügige Schwankungen bei der Ausrichtung die Kopplungseffizienz erheblich beeinflussen können. Es ist von entscheidender Bedeutung, die Kopplungsleistungsfähigkeit in Szenarien zu bewerten und abzuschätzen, in denen Fehlanpassungen zwischen Chips C1, C2 oder Wellenleitern W1, MMW1, MMW2, W2 auftreten können. Solche Fehlanpassungen können durch Fertigungstoleranzen und Montagemängel entstehen.

Fig. 8 zeigt frn EinFluss einer Fehlausrichtung auf die Übertragung T. Fig. 8 zeigt die normierte Übertragung des vereinfachten MFW-Systems 100 mit einem Eingangs-SiN-MFW und einem Ausgangs-Ormo-MFW, ohne adiabatische Verjüngungen T1, T2 und AR-Beschichtungen AR1, AR2. Die Simulation wurde mit dem FDTD-Verfahren bei einer lateralen Fehlausrichtung zwischen -2μm und 2μm und einer Wellenlänge von 1,55μm durchgeführt.

Bei der Analyse einer seitlichen Fehlausrichtung in dem MFW-System wird aufgrund der inhärenten Symmetrie der Struktur eine symmetrische Reaktion um den Nullversatz herum beobachtet. Bei einer Fehlausrichtung von ±2 μm sinkt die Kopplungseffizienz auf etwa 55 %, ein Wert, der als zufriedenstellend angesehen wird, aber noch Raum für Verbesserungen lässt. Es ist unbedingt zu beachten, dass bei einer Fehlausrichtung des zweiten MFW-Abschnitts eine Anpassung der seitlichen Positionen zumindest des Ausgangswellenleiters W2 erforderlich ist. Diese Ausgleichsmaßnahme ist unerlässlich, da sich die Selbstabbildungsposition bei einer seitlichen Fehlausrichtung verschiebt, wodurch entsprechende Anpassungen erforderlich sind, um eine optimale Kopplung und Ausrichtung des gesamten Systems zu gewährleisten.

Die Wiederholung derselben Simulation wie in Fig. 7, diesmal unter Verwendung adiabatischer Verjüngungen T1, T2, zeigt ähnliche Ergebnisse, wie in Fig. 9 gezeigt.

Fig. 9 zeigt die normierte Übertragung des MFW-Systems 100 mit einem Eingangs-SiN-MFW W1und einem Ausgangs-Ormo-MFW W2, nur mit adiabatischen Verjüngungen T1, T2 und ohne AR-Beschichtungen AR1, AR2. Die Simulation wurde mit dem EME-Verfahren bei einer Spaltschwankung zwischen 0μm und 60μm und einer Wellenlänge von 1,55μm durchgeführt.

Schließlich wurde eine Simulation bei einer Spaltlänge von 20 μm und einer Wellenlänge von 1,55 μm durchgeführt. Die adiabatischen Verjüngungen T1, T2 für beide MFW wurden optimiert für einen reibungslosen Übergang der Grundmode des Einmodenwellenleiters W1, um eine allmähliche Transformation ohne plötzliche Erregung von Moden höherer Ordnung sicherzustellen. Diese Optimierung zielte darauf ab, die Modenfeldbreiten auf beiden Seiten der Chipgrenzflächen anzupassen, um eine effiziente und verlustarme Kopplung im gesamten MFW-System 100 sicherzustellen. Die Indizes und Längen der AR-Beschichtungen Ar1, AR2 wurden auf der Grundlage der Prinzipien der optischen Interferenz und der Viertelwellenlängentheorie bestimmt.

Fig 10 a zeigt MFW-System 100 mit einem Eingangs-SiN-MFW und einem Ausgangs-Ormo-MFW. Die Simulation wurde mit dem FDTD-Verfahren bei einer Spaltlänge von 20μm und einer Wellenlänge von 1,55μm durchgeführt. Fig. 10b zeigt das resultierende elektromagnetisch (EM) Felde in der Spaltregion g als Zoom.

Die Längen der Mehrmodenabschnitte $IMMW_1$ und $IMMW_2$ können im Hinblick auf die Spaltlänge g variiert und optimiert werden, wobei auch theoretische Berechnungen berücksichtigt werden, um den Optimierungsprozess um die berechneten Werte herum zu verfeinern. Figs. 10a, 10b wurden erhalten für einen Wellenleiter W1 aus SiN; einer Verjüngungslänge $IT_1$=350μm und einer Mehrmodenwellenleiterlänge $IMMW_1$=620μm, einer Ormo W2; einer Verjüngungslänge $IT_2$=5000μm und einer Mehrmodenwellenleiterlänge $IMMW_2$=587μm. Die erhaltene normierte Übertragung beträgt T=0,92, mit Rückreflexionen R=0,036 und Beugungen von der Spaltregion D=0,042.

Die leichte Verbesserung kann auf die adiabatischen Verjüngungen T1, T2 sowie die AR-Beschichtungen AR1, AR2 zurückgeführt werden, die Reflexionen verringern und positiv zur Kopplungseffizienz beitragen.

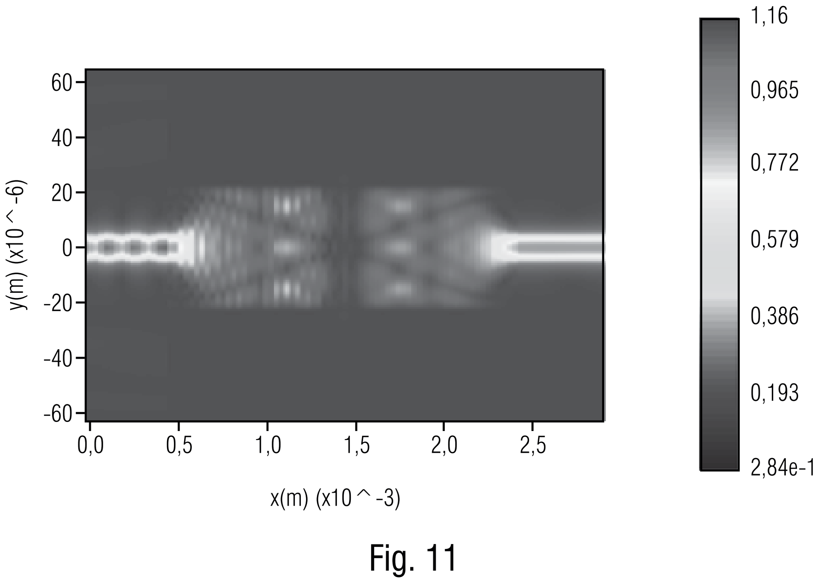

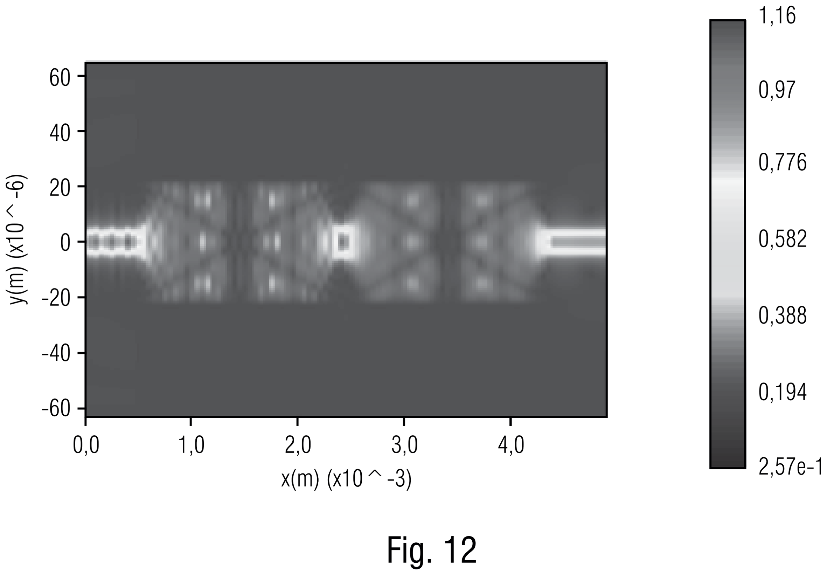

Fig. 11 und 12 zeigen Ergebnisse, bei denen die Konzentration auf der Faser-zu-Faser-Kopplung liegt, die durch die Verwendung von gedruckten MFW ohne adiabatische Verjüngungen T1, T2, Umhüllungsschichten CI1, CI2 und AR-Beschichtungen AR1, AR2 ermöglicht wird. Die MFW MMW!, MMW2 können aus anderen Materialien bestehen als das Wellenleitermaterial W1, W2 und würden auf jede Endfläche der gespaltenen SMF-Fasern gedruckt werden.

Figs. 11 und 12 zeigen jeweils ein MFW-System 100 mit einem Eingangs- und Ausgangspolymer-MFW W1, W2, der auf die Endflächen der gespaltenen Fasern gedruckt ist. Die Simulation wurde mit dem EME-Verfahren bei einer Spaltlänge von 55 $\mu$m und einer Wellenlänge von 1,55 $\mu$m durchgeführt. Eine Simulation mit MFW-Länge mit halber Selbstabbildungslänge von ~946$\mu$m zeigt Fig. 11 und mit Selbstabbildungslänge von ~1947$\mu$m zeigt. Fig. 12

Die gedruckten MFW können aus dem Polymer IP-S hergestellt werden, z. B. durch Zwei-Photonen-Polymerisation (2PP)-Technik. Das 2PP-Verfahren ermöglicht eine präzise Herstellung komplexer 3D-Strukturen im Mikromaßstab und gewährleistet eine hohe Auflösung und optimale Leistungsfähigkeit der MFW. Das IP-S hat einen Brechungsindex von etwa 1,5. Die Figs. 11 und 12 zeigen die MFW mit Abmessungen einer Breite von 45 $\mu$m und einer Dicke von 45 $\mu$m. In dem Szenario, in dem ein 55 $\mu$m breiter Spalt zwischen den Fasern vorhanden ist, übersteigt die normierte Übertragung T einen Wert von 0,9, obwohl aufgrund des Spalts g leichte Reflexionen und Beugungen auftreten.

Diese kleinen Reflexionen können durch eine Positionierung der MFW in einem Winkel abgeschwächt werden. Die Anordnung der MFW in einem Winkel trägt dazu bei, Fresnel-Reflexionen an der Grenzfläche zu verringern, indem der effektive Brechungsindexübergang verändert wird, wodurch das zurückreflektierte Licht, das das Übertragungssignal stören kann, minimiert wird. Darüber hinaus kann eine winklige Platzierung dazu beitragen, das gebeugte Licht effektiver zu steuern und umzulenken, so dass ein größerer Teil der optischen Leistung in die empfangende Faser gekoppelt wird.

Vorteile der vorliegenden Erfindung sind beispielsweise:

- Vereinfachte Montage: Das MFW-System reduziert die Notwendigkeit einer hochpräzisen Ausrichtung (in Ausbreitungsrichtung), was den Montageprozess einfacher und weniger fehleranfällig macht.

- Keine zusätzlichen Komponenten: MFW machen angebrachte Linsen oder gedruckte Drahtverbindungen überflüssig, was den Herstellungsprozess rationalisiert und die Systemkomplexität reduziert, wenn MFW in den Chips mit den Wellenleitermaterialien hergestellt werden.

- Verbesserte Integrationseffizienz: Direktes Aufdrucken von MFW auf Chip-Endflächen mittels Zwei-Photonen-Polymerisation kann die gleiche Leistungsfähigkeit erzielen wie die MFW, die in den Chips hergestellt werden.

- Abstimmbarer Entwurf: Der MFW-Entwurf kann präzise abgestimmt werden, um eine effiziente Kopplung bei verschiedenen Spaltlängen zu erreichen, was die Flexibilität bei der Chipintegration erhöht.

- Effiziente Kopplung: Bietet eine hohe Kopplungseffizienz mit minimaler Divergenz des ausgehenden Strahls, wodurch die Integrität des optischen Signals über den Spalt hinweg gewährleistet wird.

- Vielseitigkeit: Sowohl für die homogene Integration (Chips aus ähnlichem Material) als auch für die heterogene Integration (Chips aus unterschiedlichem Material) geeignet, so dass es für verschiedene photonische Anwendungen angepasst werden kann.

- Hohe Leistungsfähigkeit: Stellt eine zuverlässige und robuste optische Kopplung sicher und verbessert die Leistungsfähigkeit und Herstellbarkeit integrierter photonischer Systeme.

- Eingangs-/Ausgangswellenleiter: Diese Wellenleiter nehmen das elektromagnetische Feld in den Chips eins und zwei auf und behalten den Grundmodenzustand bei.

- Reguläre/inverse adiabatische Verjüngungen: Diese Verjüngungen dienen der Modenanpassung zwischen zwei Chips. In heterogenen Systemen mit unterschiedlichen Materialien können sich die Eingangs- und Ausgangswellenleiter aufgrund von Fertigungsstandards in ihrer Größe unterscheiden. Unterschiedliche Materialien und Wellenleitergrößen führen zu unterschiedlichen Modenfeldabmessungen (Breite und Dicke), was zu einer potentiellen Modenfehlanpassung, erhöhten Reflexionen und Einfügungsverlusten führt. Adiabatische Verjüngungen vergrößern oder verkleinern sich auf die gewünschten Abmessungen, wodurch die Modenfehlanpassung minimiert und Reflexionen verringert werden.

- Mehrmodenwellenleiterabschnitte: Der erste Mehrmodenwellenleiter projiziert das Selbstabbild der Eingangsmode von Chip C1 in die Spaltregion g. Der zweite Mehrmodenwellenleiter MMW2 nimmt dieses Bild auf und projiziert dasselbe in den Ausgangswellenleiter von Chip C2.

- AR-Beschichtungen: Ein- oder mehrlagige Antireflexionsbeschichtungen auf beiden Chips reduzieren Reflexionen erheblich.

Die AR-Beschichtungen können entfernt werden, doch würde dies die Reflexionen an den Grenzflächen erhöhen. Gleichartig dazu würde das Entfernen der adiabatischen Verjüngungen zu höheren Reflexionen und Einfügungsverlusten führen, aufgrund von plötzlichen Änderungen der Modenform und Fehlanpassungen. Die Schlüsselkomponente des MFW-Systems sind die Mehrmodenwellenleiterabschnitte und deren jeweilige Längen, die für die effiziente Übertragung der Mode zwischen den beiden Chips entscheidend sind.

Das Mehrmoden-Fokussierungswellenleiter(MFW)-System 100 dient in erster Linie im technischen Bereich der photonischen Integration, wo es zur effizienten optischen Kopplung zwischen photonischen Chips eingesetzt werden kann. Das MFW-System adressiert die Herausforderung, optische Signale mit minimaler Divergenz und minimalem Verlust über mehrere Spalten hinweg zu übertragen, was es für Anwendungen, die eine präzise Ausrichtung und hohe Kopplungseffizienz erfordern, entscheidend macht. Dies ist besonders wichtig für optische Verbindungen, bei denen die Aufrechterhaltung der Signalintegrität zwischen den Chips für die Hochgeschwindigkeitsdatenübertragung und Signalverarbeitung unerlässlich ist.

Über die Kopplung hinaus eröffnet die Fähigkeit des MFW-Systems, Licht mit minimaler Divergenz zu fokussieren und zu lenken, verschiedene weitere Anwendungen. Es kann bei der optischen Erfassung eingesetzt werden, wo die fokussierten Lichtstrahlen, die zwischen den beiden Gegenstücken stehende Wellen erzeugen, verwendet werden können, um mit hoher Empfindlichkeit Änderungen des Brechungsindex in dem Spaltmedium zu erkennen. Darüber hinaus kann das MFW-System in optische Bilderfassungssysteme integriert werden, um die Auflösung und Bildqualität durch präzise Steuerung der Lichtausbreitung zu verbessern.

Mit vorliegend beschriebenen technischen Lehre wird ein Mehrmoden-Fokussierungswellenleiter (MFW; MFW = Multimode Focusing Waveguides) genutzt, um den Herausforderungen der optischen Kopplung zwischen heterogenen Systemen auf einer einzigen Plattform zu begegnen. Durch den Einsatz von Komponenten auf der Basis von Mehrmodeninterferenz (MMI; MMI = Multimode Interference), die für ihre Einfachheit, Polarisationsunabhängigkeit und minimalen Verluste bekannt sind, erleichtert die beschriebene technische Lehre schwierige Anordnungsprozesse mit höherer Spaltlängentoleranz. Durch die Anpassung von Interferenzmustern in Mehrmodenwellenleitern kann das Licht auf das Ausgangsende hin konzentriert werden, was potentielle Anwendungen in der optischen Erfassung und Bilderzeugung ermöglicht. Durch diese Erfindung wird Licht mit minimaler Divergenz aus einem Chip heraus fokussiert und mit Hilfe eines inversen MFW in einem bestimmten Abstand auf einen anderen Chip gekoppelt.

Obwohl manche Aspekte im Zusammenhang mit einer Vorrichtung bzw. einem Verfahren beschrieben wurden, versteht es sich, dass diese Aspekte auch eine Beschreibung eines entsprechenden Verfahrens bzw. einer Vorrichtung darstellen, sodass ein Block oder ein Bauelement einer Vorrichtung bzw. eines Systems auch als ein entsprechender Verfahrensschritt oder als ein Merkmal eines Verfahrensschrittes zu verstehen ist und anders herum. Auf eine vollständige Darstellung der vorliegenden Erfindung in Form von Verfahrensschritten bzw. in Form von Vorrichtungsmerkmalen wird vorliegend aus Redundanzgründen abgesehen.

In der vorhergehenden detaillierten Beschreibung wurden teilweise verschiedene Merkmale in Beispielen zusammen gruppiert, um die Offenbarung zu rationalisieren. Diese Art der Offenbarung soll nicht als die Absicht interpretiert werden, dass die beanspruchten Beispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Beispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen. Solche Kombinationen seien umfasst, es sei denn, es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

**Patentansprüche**

1. Wellenleitersystem zum Leiten von Licht, umfassend:

    einen Eingangswellenleiter (W1) zum Leiten einer einzelnen Mode eines Lichtsignals,

einen ersten Multimoden-Wellenleiter (MMW1) zum Leiten mehrerer verschiedener Moden des Lichtsignals, wobei der Eingangswellenleiter (W1) und der Multimoden-Wellenleiter (MMW1) miteinander verbunden sind, einen zweiten Multimoden-Wellenleiter (MMW2) zum Leiten der mehreren verschiedenen Moden des Lichtsignals, und

einen Ausgangswellenleiter (W2) zum Ausleiten des Lichtsignals, wobei der Ausgangswellenleiter (W2) und der zweite Multimoden-Wellenleiter (MMW2) miteinander verbunden sind, wobei der Ausgangswellenleiter eine einzelne Mode des Lichtsignals ausleitet.

2. Wellenleitersystem nach Anspruch 1, wobei zwischen dem Eingangswellenleiter (W1) und dem ersten Multimoden-Wellenleiter (MMW1) und/oder zwischen dem Ausgangswellenleiter (W2) und dem zweiten Multimoden-Wellenleiter (MMW2) ein adiabatischer kegelförmiger Wellenleiter (T1, T2) angeordnet ist, welcher dazu ausgebildet ist, einen verlustarmen Übergang des Lichtsignals von dem Eingangswellenleiter (W1) zu dem ersten Multimoden-Wellenleiter (MMW1) und/oder von dem zweiten Multimoden-Wellenleiter (MMW2) zu dem Ausgangswellenleiter (W2) zu bewirken.

3. Wellenleitersystem nach Anspruch 1 oder 2, wobei der Eingangswellenleiter (W1) und/oder der erste Multimoden-Wellenleiter (MMW1) und/oder der zweite Multimoden-Wellenleiter (MMW2) und/oder der Ausgangswellenleiter (W2) eine kubische oder eine rechteckige oder eine zylindrische Geometrie aufweisen.

4. Wellenleitersystem nach einem der vorherigen Ansprüche, der erste Multimoden-Wellenleiter (MMW1) und der zweite Multimoden-Wellenleiter (MMW2) über eine Spaltregion (g) gekoppelt sind, wobei die Spaltregion (g) dazu ausgebildet ist, in der Spaltregion (g) eine stehende Welle aus dem Lichtsignal zu erzeugen, insbesondere wobei die Spaltregion (g) mit Luft oder einer Flüssigkeit gefüllt ist, insbesondere welche einem Brechungsindex aufweist, der einem Brechungsindex der Multimoden-Wellenleiter (MMW1, MMW2) entspricht.

Wellenleitersystem nach einem der vorherigen Ansprüche, wobei der erste Multimoden-Wellenleiter (MMW1) mit einem seiner Enden einem Ende des zweiten Multimoden-Wellenleiter (MMW2) gegenüberliegend angeordnet ist, wobei die gegenüberliegenden Enden des ersten und der zweiten Multimodenleiters (MMW1, MMW1)jeweils eine Anti-Reflexionsbeschichtung (AR1, AR2) aufweisen, um Reflexionen zu verringern.

5. Wellenleitersystem nach einem der vorherigen Ansprüche, wobei der erste Multimoden-Wellenleiter (MMW1) und/oder der zweite Multimoden-Wellenleiter (MMW2) jeweils eine geometrische Länge (IMMW1, IMMMW2) aufweist, welche einer halben Selbstabbildungslänge (half self imaging lenght) oder einer ganzen Selbstabbildungslänge oder ein ganzes Vielfaches der halben oder ganzen Selbstabbildungslänge entspricht, wodurch das Lichtsignal im Wesentlichen ohne Verlust von dem ersten Multimoden-Wellenleiter (MMW1) in den zweiten Multimoden-Wellenleiter (MMW1) übertritt.

6. Wellenleitersystem nach Anspruch 4, wobei die halbe Selbstabbildungslänge einer Kopplungslänge Lc entspricht, bei welcher die Eingangsmode des Lichtsignals zwischen dem ersten Multimoden-Wellenleiter (MMW1) und dem zweiten Multimoden-Wellenleiter (MMW1) im Wesentlichen verlustlos übertragbar ist und welche gegeben ist durch

$$L_c \approx \frac{2\pi}{(\beta_0 - \beta_2)},$$

wobei $\beta_0$ eine Ausbreitungskonstante einer Grundmode des Lichtsignals und $\beta_2$ eine Ausbreitungskonstante der höheren Moden des Lichtsignals ist, oder
welche bei Vorhandensein der Spaltregion (g) zwischen dem ersten Multimoden-Wellenleiter (MMW1) und dem zweiten Multimoden-Wellenleiter (MMW2) gegeben ist durch

$$L_c \approx \frac{2\pi}{(\beta_0 - \beta_2)} \pm \delta,$$

wobei $\delta$ eine Offsetlänge ist.

7. Wellenleitersystem nach Anspruch 4 oder 5, wobei die ganze Selbstabbildungslänge der doppelten Kopplungslänge Lc entspricht, bei welcher ein Bild des Lichtsignals der Eingangsmode sowohl in einem Bereich der Spaltregion (g) als auch in dem Ausgangswellenleiter (W2) wiederhergestellt ist.

8. Wellenleitersystem nach einem der vorherigen Ansprüche, wobei der Eingangswellenleiter (W1) und der Ausgangswellenleiter (W2) jeweils an einen ihrer Enden, welcher nicht mit dem entsprechenden Multimoden-Wellenleiter (MMW1, MMW2) gekoppelt ist, mit einem Anschluss (P1, P2) gekoppelt ist.

9. Wellenleitersystem nach einem der vorherigen Ansprüche, wobei der Eingangswellenleiter (W1) und der erste Multimoden-Wellenleiter (MMW1) von einer ersten Ummantelung (CI1) umgeben sind, wobei der Ausgangswellenleiter (W2) und der zweite Multimoden-Wellenleiter (MMW1) von einer zweiten Ummantelung (CI2) umgeben sind.

10. Wellenleitersystem nach Anspruch 8, wobei ein Material der ersten Ummantelung (CI1) einem Material der zweiten Ummantelung (CI2) entspricht oder das Material der ersten Ummantelung (CI1) ein anderes Material als das Material der zweiten Ummantelung (CI2) ist.

11. Wellenleitersystem nach Anspruch 7, wobei die Anschlüsse (P1, P2) mit jeweils einen Chip (C1, C2) koppelbar oder gekoppelt sind.

12. Wellenleitersystem nach einem der vorherigen Ansprüche, wobei bei einer Wellenlänge von 1,55 $\mu$m des Lichtsignals die Spaltregion (g) eine Breite (Ig) zwischen dem ersten und dem zweiten Multimoden-Wellenleiter (MMW1, MMW2) von 0$\mu$m bis 60$\mu$m, bevorzugt etwa 20 $\mu$m, aufweist.

13. Verfahren zum Herstellen eines Wellenleitersystems, insbesondere nach einem der Ansprüche 1 bis 11, umfassend:

Bereitstellen eines Eingangswellenleiters (W1) zum Leiten einer einzelnen Mode eines Lichtsignals und eines ersten Multimoden-Wellenleiters (MMW1) zum Leiten mehrerer verschiedener Moden des Lichtsignals,
Verbinden des Eingangswellenleiter (W1) und des ersten Multimoden-Wellenleiter (MMW1) miteinander,
Bereitstellen eines zweiten Multimoden-Wellenleiter (MMW2) zum Leiten der mehreren verschiedenen Moden des Lichtsignals und eines Ausgangswellenleiters (W2) zum Ausleiten des Lichtsignals,
Verbinden des Ausgangswellenleiters (W2) und des zweiten Multimoden-Wellenleiter (MMW2) miteinander, und
Anordnen des ersten Multimoden-Wellenleiters (MMW1) gegenüber dem zweiten Multimoden-Wellenleiter (MMW2), derart, dass der Eingangswellenleiter an einem Ende des ersten Multimoden-Wellenleiters (MMW1) und der zweite Multimoden-Wellenleiter (MMW2) dem ersten Multimoden-Wellenleiter (MMW1) gegenüberliegend angeordnet ist.

14. Verfahren nach Anspruch 12, umfassend:

Anordnen des ersten Multimoden-Wellenleiters (MMW1) gegenüber dem zweiten Multimoden-Wellenleiter (MMW2) um eine
Spaltregion (g) beabstandet zueinander, und/oder
Beschichten einer Endoberfläche des ersten Multimoden-Wellenleiters (MMW1) mit mit einer AR1-Beschichtung (AR1) und/oder des zweiten Multimoden-Wellenleiters (MMW2) mit einer AR2-Beschichtung (AR2), wobei die beschichtete Endoberfläche des entsprechenden Multimoden-Wellenleiters (MMW1, MMW2) jene ist, welche dem anderen Multimoden-Wellenleiters (MMW1, MMW2) gegenüberliegend angeordnet wird, und/oder
Anordnen mindestens eines adiabatischen kegelförmigen Wellenleiter (T1, T2) zwischen dem Eingangswellenleiter (W1) und dem ersten Multimoden-Wellenleiter (MMW1) und/oder zwischen dem Ausgangswellenleiter (W2) und dem zweiten Multimoden-Wellenleiter (MMW2), um einen Übergang des Lichtsignals von dem Eingangswellenleiter (W1) zu dem Multimoden-Wellenleiter (MMW1) und/oder von dem zweiten Multimoden-Wellenleiter (MMW2) zu dem Ausgangswellenleiter (W2) verlustarm zu bewirken.

15. Verfahren nach einem der Ansprüche 12 oder 13, umfassend:
Ummanteln des Eingangswellenleiters (W1) und des ersten Multimoden-Wellenleiters (MMW1) mit einer ersten Ummantelung (CL1) und/oder des zweiten Multimoden-Wellenleiters (MMW2) mit einer zweiten Ummantelung (CL2), um Reflexionen zu reduzieren.

16. Verfahren zum Betreiben eines Wellenleitersystems, insbesondere nach einem der Ansprüche 1 bis 11, umfassend:

Einkoppeln eines Lichtsignales, insbesondere aus einem ersten Chip (C1), in einen Eingangswellenleiter (W1), wobei beim Einkoppeln des Lichtsignals ein erster Teil (R11) des Lichtsignals in dem Eingangswellenleiter (W1) reflektiert wird und ein zweiter Teil (T21) des Lichtsignales in dem Eigangwellenleiter (W1) transmittiert wird,
Einkoppeln eines transmittierten zweiten Teils (T21) des Lichtsignals aus dem Eingangswellenleiter (W1) in einen ersten Multimoden-Wellenleiter (MMW1), wobei in dem ersten Multimoden-Wellenleiter (MMW1) eine Multimoden-Interferenz des transmittierten Lichtsignals bewirkt wird, bei welcher eine Selbstabbildung des Lichtsignals erfolgt, bei welcher ein fokussierter Lichtstrahl einer Grundmode des Lichtstrahls des ersten Wellenleiter (W1) mit geringer Konvergenz entsteht,

Einkoppeln des transmittierten Signals von dem ersten Multimoden-Wellenleiter (MMW1) in den zweiten Multimoden-Wellenleiter (MMW2), wobei in dem zweiten Multimoden-Wellenleiter (MMW2) eine weitere Multimoden-Interferenz des transmittierten Lichtsignals erfolgt, bei welcher eine weitere Selbstabbildung des Lichtsignals erfolgt, bei welcher ein weiterer fokussierter Lichtstrahl mit geringer Konvergenz entsteht, bei welcher die Grundmode des ersten Wellenleiter W1 in eine Grundmode eine zweiten Wellenleiters übersetzt wird;

Einkoppeln des Lichtsignales in einen Ausgangswellenleiter (W2), um das fokussierte Lichtsignal aus dem Wellenleitersystem auszukoppeln, insbesondere um das fokussierte Licht in einen zweiten Chip einzukoppeln.

**17.** Verfahren nach Anspruch 15, umfassend:

Einkoppeln des Lichtsignals von dem ersten Multimoden-Wellenleiters (MMW1) in eine Spaltregion (g) zwischen dem ersten Multimoden-Wellenleiters (MMW1) und dem zweiten Multimoden-Wellenleiter (MMW2), und/oder

Einkoppeln des Lichtsignals von dem ersten Multimoden-Wellenleiters (MMW1) in eine erste Antireflexionsbeschichtung (AR1) an einer Endoberfläche des ersten Multimoden-Wellenleiters (MMW1), um eine Reflexion zurück in den ersten Multimoden-Wellenleiters (MMW1) zu verringern, und/oder

Einkoppeln des Lichtsignals in eine zweite Antireflexionsbeschichtung (AR2) an einer Endoberfläche des zweiten Multimoden-Wellenleiters (MMW1), um eine Reflexion zurück in den ersten Multimoden-Wellenleiter (MMW1) oder in die Spaltregion (g) zu verringern, und/oder

Einkoppeln des Lichtsignals in einen adiabatischen kegelförmigen Wellenleiter (T1, T2) zwischen dem Eingangswellenleiter (W1) und dem ersten Multimoden-Wellenleiter (MMW1) und/oder zwischen dem Ausgangswellenleiter (W2) und dem zweiten Multimoden-Wellenleiter (MMW2), um einen Übergang des Lichtsignals von dem Eingangswellenleiter (W1) zu dem ersten Multimoden-Wellenleiter (MMW1) und/oder von dem zweiten Multimoden-Wellenleiter (MMW2) zu dem Ausgangswellenleiter (W2) zu verbessern

Fig. 1

Fig. 2

Fig. 3

Fig. 4

Fig. 5

EP 4 779 372 A1

Fig. 6

Fig. 7

EP 4 779 372 A1

Fig. 8

Fig. 9

EP 4 779 372 A1

Fig. 10A

Fig. 10B

EP 4 779 372 A1

Fig. 11

Fig. 12

EP 4 779 372 A1

Verfahren zum Herstellen eines Wellenleitersystems umfassend: 〜 1300

Bereitstellen eines Eingangswellenleiters (W1) zum Leiten einer einzelnen Mode eines Lichtsignals und eines ersten Multimoden-Wellenleiters (MMW1) zum Leiten mehrerer verschiedener Moden des Lichtsignals, 〜 1310

Verbinden des Eingangswellenleiter (W1) und des ersten Multimoden-Wellenleiter (MMW1) miteinander, 〜 1320

Bereitstellen eines zweiten Multimoden-Wellenleiter (MMW2) zum Leiten der mehreren verschiedenen Moden des Lichtsignals und eines Ausgangswellenleiters (W2) zum Ausleiten des Lichtsignals, 〜 1330

Verbinden des zweiten Ausgangswellenleiters (W2) und des zweiten Multimoden-Wellenleiter (MMW2) miteinander, und 〜 1340

Anordnen des ersten Multimoden-Wellenleiters (MMW1) gegenüber dem zweiten Multimoden-Wellenleiter (MMW2), derart, dass der Eingangswellenleiter an einem Ende des ersten Multimoden-Wellenleiters (MMW1) und der zweite Multimoden-Wellenleiter (MMW2) dem ersten Multimoden-Wellenleiter (MMW1) gegenüberliegend angeordnet ist. 〜 1350

Fig. 13

Verfahren zum Betreiben eines Wellenleitersystems umfassend: ⌒ 1400

Einkoppeln eines Lichtsignales in einen Eingangswellenleiter (W1), wobei beim Einkoppeln des Lichtsignals ein erster Teil (R11) des Lichtsignals in dem Eingangswellenleiter (W1) reflektiert wird und ein zweiter Teil (T21) des Lichtsignales in dem Eigangwellenleiter (W1) transmittiert wird, ⌒ 1410

Einkoppeln eines transmittierten zweiten Teils (T21) des Lichtsignals aus dem Eingangswellenleiter (W1) in einen ersten Multimoden-Wellenleiter (MMW1), wobei in dem ersten Multimoden-Wellenleiter (MMW1) eine Multimoden-Interferenz des transmittierten Lichtsignals bewirkt wird, bei welcher eine Selbstabbildung des Lichtsignals erfolgt, bei welcher ein fokussierter Lichtstrahl einer Grundmode des Lichtstrahls des ersten Wellenleiter (W1) mit geringer Konvergenz entsteht, ⌒ 1420

Einkoppeln des transmittierten Signals von dem ersten Multimoden-Wellenleiter (MMW1) in den zweiten Multimoden-Wellenleiter (MMW2), wobei in dem zweiten Multimoden-Wellenleiter (MMW2) eine weitere Multimoden-Interferenz des transmittierten Lichtsignals erfolgt, bei welcher eine weitere Selbstabbildung des Lichtsignals erfolgt, bei welcher ein weiterer fokussierter Lichtstrahl mit geringer Konvergenz entsteht, bei welcher die Grundmode des ersten Wellenleiter W1 in eine Grundmode eine zweiten Wellenleiters übersetzt wird; ⌒ 1430

Einkoppeln des Lichtsignales in einen Ausgangswellenleiter (W2), um das fokussierte Lichtsignal aus dem Wellenleitersystem auszukoppeln. ⌒ 1440

## Fig. 14

Europäisches
Patentamt

European
Patent Office

Office européen
des brevets

# EUROPÄISCHER RECHERCHENBERICHT

Nummer der Anmeldung

EP 26 15 1035

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 411 737 B1 (HUAWEI TECH CO LTD [CN]) 28. Juli 2021 (2021-07-28) * Absätze [0012] - [0017] * * Abbildung 5 * ----- | 1-17 | INV. G02B6/30 G02B6/122 |
| X | US 2002/191907 A1 (KINOSHITA TAIRA [JP] ET AL) 19. Dezember 2002 (2002-12-19) * Absätze [0097], [0101] - [0102] * * Abbildungen 8, 10 * ----- | 1-17 | ADD. G02B6/28 |
| X | VAN ERPS J. ET AL: "3D nanoprinting of mode-field conversion tapers for low-loss optical interfacing of single-mode fibers and photonic integrated circuits", PROCEEDINGS OF THE SPIE SPIE, US, Bd. 11692, 5. März 2021 (2021-03-05), Seiten 116920M-116920M, XP060140309, ISSN: 0277-786X, DOI: 10.1117/12.2579192 ISBN: 9781510657380 * Abbildungen 2, 3 * ----- | 1-17 | |
| X | US 2007/081764 A1 (DELIWALA SHRENIK [US]) 12. April 2007 (2007-04-12) * Abbildungen 2A, 3 * ----- | 1-17 | **RECHERCHIERTE SACHGEBIETE (IPC)** G02B |
| X | US 11 275 210 B1 (THOMPSON MARK [US]) 15. März 2022 (2022-03-15) * Abbildung 2 * ----- | 1-17 | |

Der vorliegende Recherchenbericht wurde für alle Patentansprüche erstellt

| Recherchenort | Abschlußdatum der Recherche | Prüfer |
|---|---|---|
| Den Haag | 21. Mai 2026 | Hohmann, Leander |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 26 15 1035

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2026

| Im Recherchenbericht angeführtes Patentdokument | Datum der Veröffentlichung | Mitglied(er) der Patentfamilie | Datum der Veröffentlichung |
|---|---|---|---|
| EP 3411737 B1 | 28-07-2021 | CN 108027476 A | 11-05-2018 |
| | | EP 3411737 A1 | 12-12-2018 |
| | | JP 2019511741 A | 25-04-2019 |
| | | US 9709738 B1 | 18-07-2017 |
| | | WO 2017152449 A1 | 14-09-2017 |
| US 2002191907 A1 | 19-12-2002 | JP 3749652 B2 | 01-03-2006 |
| | | JP 2002006155 A | 09-01-2002 |
| | | US 2001053262 A1 | 20-12-2001 |
| | | US 2002191907 A1 | 19-12-2002 |
| US 2007081764 A1 | 12-04-2007 | KEINE | |
| US 11275210 B1 | 15-03-2022 | US 11275210 B1 | 15-03-2022 |
| | | US 11714329 B1 | 01-08-2023 |
| | | US 12372725 B1 | 29-07-2025 |

EPO FORM P0461

Für nähere Einzelheiten zu diesem Anhang : siehe Amtsblatt des Europäischen Patentamts, Nr.12/82